# EUROPEAN PATENT SPECIFICATION

(11) **EP 0 952 323 B1**
(45) Date of publication and mention of the grant of the patent: **31.03.2004**
(21) Application number: 99107282.8
(22) Date of filing: 14.04.1999
(51) Int. Cl.: F02D 41/40, F02D 41/30, F02D 21/08

(54) **Internal combustion engine**
Brennkraftmaschine
Moteur à combustion interne

(30) Priority: 15.04.1998 JP 10501798; 21.07.1998 JP 20502398
(43) Date of publication of application: 27.10.1999
(73) Proprietor: TOYOTA JIDOSHA KABUSHIKI KAISHA, Aichi-ken 471-8571 (JP)
(72) Inventor: Ito, Takekazu, Toyota-shi, Aichi-ken, 471-8571 (JP); Sasaki, Shizuo, Toyota-shi, Aichi-ken, 471-8571 (JP); Yoshizaki, Kouji, Toyota-shi, Aichi-ken, 471-8571 (JP); Gotoh, Masato, Toyota-shi, Aichi-ken, 471-8571 (JP); Murata, Hiroki, Toyota-shi, Aichi-ken, 471-8571 (JP); Iwasaki, Eiji, Toyota-shi, Aichi-ken, 471-8571 (JP); Tanaka, Toshiaki, Toyota-shi, Aichi-ken, 471-8571 (JP); Hirota, Shinya, Toyota-shi, Aichi-ken, 471-8571 (JP); Ohashi, Nobumoto, Toyota-shi, Aichi-ken, 471-8571 (JP); Ito, Kazuhiro, Toyota-shi, Aichi-ken, 471-8571 (JP)
(74) Representative: Leson, Thomas Johannes Alois, Dipl.-Ing.

(56) References cited:
- EP-A- 0 740 056
- EP-A- 0 803 645
- DE-A- 4 333 424
- US-A- 5 692 464
- YANAGIHARA H ET AL: "A STUDY OF DI DIESEL COMBUSTION UNDER UNIFORM HIGHER-DISPERSED MIXTURE FORMATION" JSAE REVIEW,SOCIETY OF AUTOMOTIVE ENGINEERS OF JAPAN, TOKYO,JP, vol. 18, no. 3, July 1997 (1997-07), pages 247-254, XP000979665 ISSN: 0389-4304

## Description

### BACKGROUND OF THE INVENTION

### 1. FIELD OF THE INVENTION

The present invention relates to an internal combustion engine according to the preamble of claim 1, wherein an inert gas is introduced into a combustion chamber for combustion.

### 2. DESCRIPTION OF THE RELATED ART

Conventionally, in an internal combustion engine, for example, in a diesel engine, in order to restrict generation of NOx, an engine exhaust passage and an engine intake passage are connected by an exhaust gas recirculation (hereinafter, refer to an EGR) passage so as to recirculate an exhaust gas, that is, an EGR gas into the engine intake passage via the EGR passage. In this case, since the EGR gas has a relatively high specific heat and accordingly can absorb a large amount of heat, a combustion temperature in the combustion chamber is lowered as the amount of the EGR gas is increased, that is, a rate of the EGR (EGR gas amount/(EGR gas amount + intake air amount)) is increased. When the combustion temperature is lowered, a generation amount of NOx is lowered. Therefore, the more the EGR rate is increased, the less the generation amount of NOx becomes.

As mentioned above, it has been conventionally known that the generation amount of NOx can be lowered when the EGR rate is increased. However, in the case where the EGR rate is increased, the amount of soot, i.e., smoke generated when the EGR rate exceeds a certain limit begins increasing rapidly. In consideration of the foregoing point, it has been conventionally assumed that the smoke is unlimitedly increased if the EGR rate is further increased even after exceeding the limit. Therefore, it has been considered that the EGR rate at which the smoke begins increasing rapidly is the maximum allowable value for the limit thereof.

Accordingly, the EGR rate has been conventionally defined within a range within the maximum allowable limit. The maximum allowable limit of the EGR rate which significantly differs depending on the type of the engine and the fuel usually ranges from about 30 % to 50 %. Therefore, in the conventional diesel engine, the EGR rate is restricted to be in the range from about 30 % to 50 % at the maximum.

As mentioned above, since it has been conventionally considered that the EGR rate has a maximum allowable limit, the EGR rate has been defined to the value in the range which does not exceed the maximum allowable limit such that the generation amount of the smoke is restricted as least as possible. The EGR rate is defined to reduce the generation amount of NOx and the smoke, however, there is a limit in such effort for reducing the generation amount of NOx and the smoke. On that ground, a significant amount of NOx and smoke are still generated.

However, in a process of researching a combustion in the diesel engine, it has been found that when making the EGR rate greater than the maximum allowable limit, the smoke is rapidly increased as mentioned above, however, the generation amount of the smoke has a peak, and when increasing the EGR rate exceeding the peak, then the smoke begins decreasing rapidly at this time. When setting the EGR rate to the value equal to or more than 70 % at an idling or the value equal to or greater than 55% in case of cooling the EGR gas strongly, the generation amount of the smoke becomes substantially 0. That is the soot is hardly generated. Further, it has been found that the generation amount of NOx is significantly reduced to a small value at this time. Thereafter, on the basis of this information, the reason of the soot reduction has been examined, and as a result, a new combustion system that has not been provided before and can simultaneously reduce the soot and NOx has been constructed. The new combustion system will be described in detail. In a word, it is based on a principle to prevent the growth of a hydrocarbon in the middle of step where the hydrocarbon grows to the soot.

That is, it is ascertained as a result of repeated experiments and researches that the growth of the hydrocarbon stops in the middle of step before the hydrocarbon grows to the soot when a temperature of the fuel and the surrounding gas at a time of combustion in the combustion chamber is equal to or less than a predetermined temperature, and that the hydrocarbon grows to the soot at a stroke when the temperature of the fuel and the surrounding gas reaches the predetermined temperature. In this case, the temperature of the fuel and the surrounding gas is greatly influenced by an endothermic effect of the gas surrounding the fuel at a time when the fuel is burned. Therefore, it is possible to control the temperature of the fuel and the surrounding gas by adjusting the heat absorption amount of the gas surrounding the fuel in correspondence to the generation amount at the fuel combustion.

Accordingly, when restricting the temperature of the fuel and the surrounding gas at combustion in the combustion chamber to a level equal to or less than the temperature at which the growth of the hydrocarbon is interrupted on the way, the soot is not generated. Accordingly it is possible to restrict the temperature of the fuel and the surrounding gas at the combustion in the combustion chamber to the level equal to or less than the temperature at which the growth of the hydrocarbon is interrupted on the way by adjusting the heat absorption amount of the gas surrounding the fuel. On the contrary, the hydrocarbon that has been interrupted to grow to the soot on the way can be easily purified by an after treatment using an oxidation catalyst or the like. This is a basic principle of the new combustion system. The internal combustion engine employing the new combustion system was already filed as EP-A-879,946 by the applicant of the present invention.

Here, the new combustion system requires to set the EGR rate to a value equal to or more than 55 % approximately. However, the EGR rate can be made equal to or more than 55 % when the intake air amount is relatively small, that is, an engine load is relatively low. The new combustion can not be performed when the intake air amount exceeds a predetermined amount. Accordingly, when the intake air amount exceeds a predetermined amount, it is necessary to switch the combustion type to the conventional one.

However, as the aspect of the combustion between the new and the conventional types is different, an optimum fuel injection start timing under the new type combustion is totally different from an optimum fuel injection start timing under the conventional type combustion. That is, since the new type combustion is performed in the presence of a large amount of the EGR gas, the combustion is slowly performed. Accordingly, when the injection of the fuel at the optimum injection start timing under the conventional type combustion is performed, a good combustion is not performed since the injection start timing is too late, leading to a misfire.

Further, in the case of switching the new type combustion to the conventional type combustion, it is necessary to switch the EGR rate in the combustion chamber momentarily. Actually, it is hard to switch the EGR rate in the combustion chamber momentarily. Accordingly, the EGR rate in the combustion chamber gently changes. That is, in case of switching from the new type combustion to the conventional type combustion or vice versa, either form of the combustion is gently switched.

Accordingly, when switching the combustion from the new type to the conventional type, it is preferable to switch the fuel injection start timing and the fuel injection amount gently from those suitable for the conventional type. Further, in the case of switching to the new combustion from the conventionally performed combustion, it is preferable to switch the fuel injection start timing and the fuel injection amount suitable for the new type gently from the injection start timing and the injection amount suitable for the conventional type.

### SUMMARY OF THE INVENTION

An object of the present invention is to provide an internal combustion engine structured such that an optimum injection control is performed at a time of switching a new combustion and a conventionally performed combustion.

The above object is solved by combination of features of the main claim, the sub-claims disclose further advantageous embodiments of the invention.

In order to achieve the above object, in accordance with the present invention, there is provided an internal combustion according to claim 1.

### BRIEF DESCRIPTION OF THE DRAWINGS

Fig. 1 is a block diagram illustrating a whole structure of a compression ignition type internal combustion engine in accordance with the present invention;
Fig. 2 is a graph which shows a change of an output torque and a change of a smoke, HC, CO and NOx depending on the air fuel ratio;
Figs. 3A and 3B are graphs which show a combustion pressure;
Fig. 4 is a view which shows a molecule of a fuel;
Fig. 5 is a graph which shows a relation between a generation amount of a smoke and an EGR rate;
Fig. 6 is a graph which shows a relation between a total intake gas amount and a required load;
Fig. 7 is a graph which shows a first operation area I and a second operation area II;
Fig. 8 is a graph which shows an output of an air fuel ratio sensor;
Fig. 9 is a graph which shows an opening degree of a throttle valve, an opening degree of an EGR control valve, an EGR rate, an air fuel ratio, an injection timing and an injection amount at the required load;
Fig. 10 is a graph which shows an air fuel ratio in the first operation area I;
Figs. 11A and 11B are views which show a map of a target opening degree of the throttle valve;
Fig. 12 is a graph which shows an air fuel ratio in the second combustion mode;
Figs. 13A and 13B are views which show a map of a target opening degree of the throttle valve;
Figs. 14A, 14B and 14C are views which show a map of an injection amount;
Figs. 15A, 15B and 15C are views which show an injection start timing;
Figs. 16A, 16B and 16C are views which show a pilot injection timing;
Figs. 17A and 17B are views which show an injection period;
Fig. 18 is a flow chart for controlling an operation of the engine;
Fig. 19 is a flow chart for executing an injection control I;
Fig. 20 is a flow chart for executing an injection control I;
Fig. 21 is a flow chart for executing an injection control II;
Fig. 22 is a flow chart for executing an injection control II;
Fig. 23 is a graph which shows a temperature Ta of an exhaust gas flowing into a catalyst and temperatures Tb and Tc of a catalyst bed;
Figs. 24A and 24B are views for explaining an intake and discharge operation of NOx;
Figs. 25A and 25B are views which show a map of an NOx absorption amount per a unit time;
Fig. 26 is a flow chart for treating an NOx desorption flag;
Fig. 27 is a flow chart for controlling an operation of the engine;
Fig. 28 is a flow chart for controlling a rich flag;
Fig. 29 is a flow chart for controlling an operation of the engine; and
Fig. 30 is a flow chart for controlling an operation of the engine.

### DESCRIPTION OF THE PREFERRED EMBODIMENT

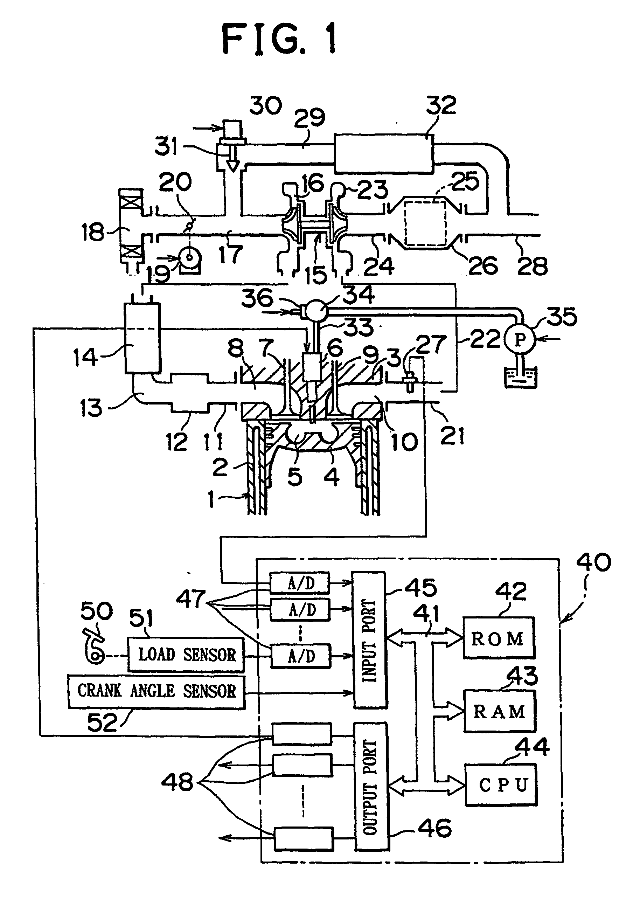

Fig. 1 shows an embodiment in which the present invention is applied to a 4-stroke compression ignition type internal combustion engine.

With reference to Fig. 1, reference numeral 1 denotes a main body of an engine, reference numeral 2 denotes a cylinder block, reference numeral 3 denotes a cylinder head, reference numeral 4 denotes a piston, reference numeral 5 denotes a combustion chamber, reference numeral 6 denotes an electrically controlled type fuel injection valve, reference numeral 7 denotes an intake valve, reference numeral 8 denotes an intake port, reference numeral 9 denotes an exhaust valve, and reference numeral 10 denotes an exhaust port, respectively. The intake port 8 is connected to a surge tank 12 via a corresponding intake branch pipe 11, which is connected to a supercharger, for example, an outlet of a compressor 16 of an exhaust turbo charger 15 via an intake duct 13 and an inter cooler 14. An inlet of the compressor 16 is connected to an air cleaner 18 via an air intake pipe 17, and a throttle valve 20 driven by a step motor 19 is arranged within the air intake pipe 17.

Meanwhile, the exhaust port 10 is connected to an inlet of an exhaust turbine 23 of the exhaust turbo charger 15 via an exhaust manifold 21 and an exhaust pipe 22, and an outlet portion of the exhaust turbine 23 is connected to a catalytic converter 26 containing a catalyst 25 having an oxidation function via an exhaust pipe 24. An air fuel ratio sensor 27 is arranged within the exhaust manifold 21.

An exhaust pipe 28 connected to an outlet portion of the catalyst converter 26 and the air intake pipe 17 disposed downstream the throttle valve 20 are connected to each other via an exhaust gas recirculation (hereinafter, referred to an EGR) passage 29, and an EGR control valve 31 driven by a step motor 30 is arranged within the EGR passage 29. An inter cooler 32 for cooling an EGR gas flowing through the EGR passage 29 is arranged therein. In the embodiment shown in Fig. 1, an engine cooling water is introduced into the inter cooler 32 for cooling the EGR gas.

Further, the fuel injection valve 6 is connected to a fuel reservoir, so-called a common rail 34 via a fuel supply pipe 33. A fuel is supplied into the common rail 34 from an electrically controlled type fuel pump 35 in which a discharge amount is variable, and the fuel supplied into the common rail 34 is supplied to the fuel injection valve 6 via each of the fuel supply pipes 33. A fuel pressure sensor 36 for detecting a pressure of a fuel within the common rail 34 is mounted to the common rail 34. The discharge amount of the fuel pump 35 can be controlled such that the pressure of the fuel within the common rail 34 becomes a target pressure of a fuel based on an output signal of the fuel pressure sensor 36.

An electronic control unit 40 is formed as a digital computer, and is provided with a read only memory (ROM) 42, a random access memory (RAM) 43, a microprocessor (CPU) 44, an input port 45 and an output port 46 mutually connected by a two-way bus 41. An output signal of the air fuel ratio sensor 27 is input to the input port 45 via a corresponding AD converter 47, and an output signal of the fuel pressure sensor 36 is also input to the input port 45 via the corresponding AD converter 47. A load sensor 51 for generating an output voltage in proportional to a depression amount L of an acceleration pedal 50 is connected to the acceleration pedal 50, and an output voltage of the load sensor 51 is input to the input port 45 via the corresponding AD converter 47. Further, a crank angle sensor 52 for generating an output pulse every time when a crank shaft rotates, for example, at 30° is connected to the input port 45. On the contrary, the output port 46 is connected to the fuel injection valve 6, the step motor 19 for controlling the throttle valve, the step motor 30 for controlling the EGR control valve and the fuel pump 35 via a corresponding drive circuit 48.

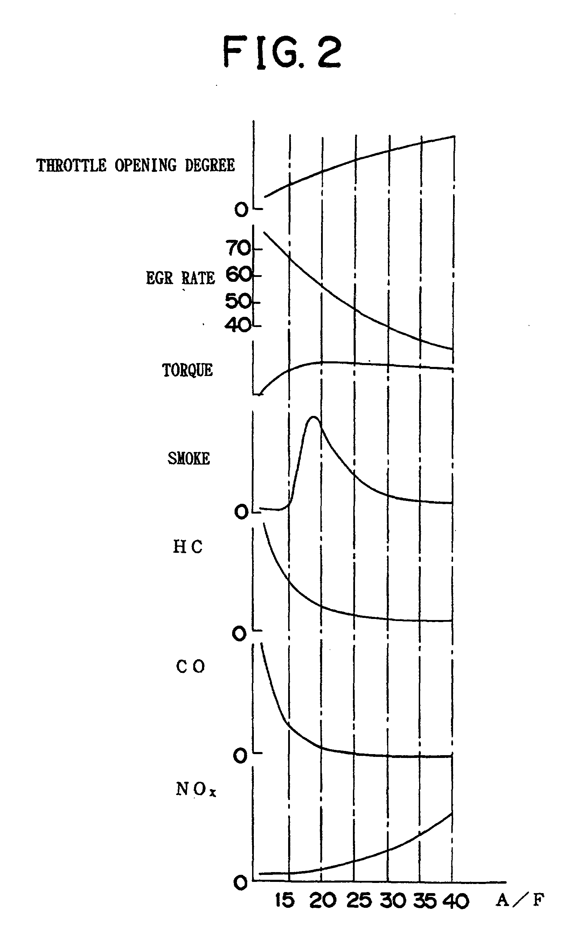

Fig. 2 is an experimental example representing a change of an output torque and a change of a discharge amount of a smoke, HC, CO and NOx when varying an air fuel ratio A/F (an axis of abscissas in Fig. 2) by changing an opening degree of the throttle valve 20 and the EGR rate when operating the engine under a low load. As is understood from Fig. 2, in this experimental example, the smaller the air fuel ratio A/F becomes, the greater the EGR rate becomes, and the EGR rate becomes equal to or more than 65 % when a stoichiometric air fuel ratio is equal to or less than 14,6.

As shown in Fig. 2, in case of decreasing the air fuel ratio A/F to the smaller value by increasing the EGR rate, the generation amount of the smoke begins to increase when the EGR rate reaches around 40 % and the air fuel ratio A/F becomes about 30 . Then, when further increasing the EGR rate and decreasing the air fuel ratio A/F to be smaller, the generation amount of the smoke is suddenly increased to reach a peak. Next, when further increasing the EGR rate and decreasing the air fuel ratio A/F to be smaller, the smoke is sharply reduced at this time point, and when the air fuel ratio A/F reaches around 15.0 at the EGR rate set to the value equal to or more than 65 %, the generation amount of the smoke becomes substantially 0. That is, substantially no soot is generated. At this time, the output torque of the engine is slightly reduced and the generation amount of NOx is significantly reduced. On the other hand, the generation amount of HC and CO begins to increase at this time.

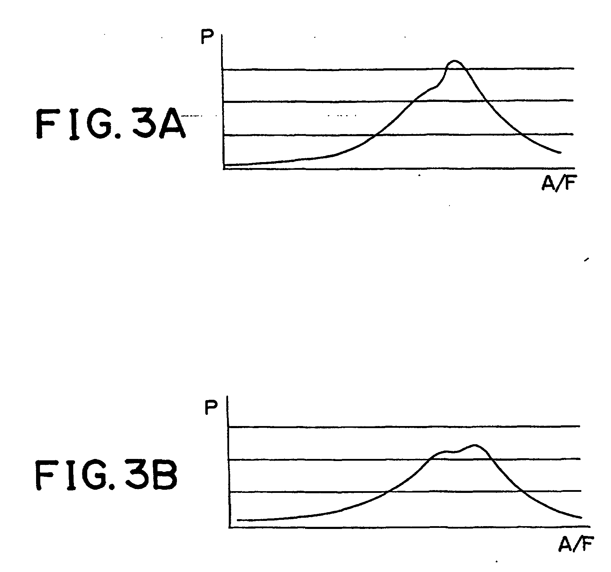

Fig. 3A shows the change of a combustion pressure in the combustion chamber 5 when the air fuel ratio A/F measures near 18 and the generation amount of the smoke is the largest. Fig. 3B shows a change of a combustion pressure in the combustion chamber 5 when the air fuel ratio A/F measures near 13 and the generation amount of the smoke is substantially 0. As is understood from comparison between Figs. 3A and 3B, the combustion pressure shown in Fig. 3B where the generation amount of the smoke is substantially 0 is lower than the combustion pressure shown in Fig. 3A where a large amount of the smoke is generated.

The following results can be introduced from the experimental results shown in Figs. 2 and 3. That is, at first, when the air fuel ratio A/F is equal to or less than 15.0 and the generation amount of the smoke is substantially 0, the generation amount of NOx is significantly reduced as shown in Fig. 2. The reduction of the generation amount of NOx may decrease the combustion temperature in the combustion chamber 5. It can be said that the combustion temperature in the combustion chamber 5 decreases when the soot is hardly generated. The same fact can be clarified from Fig. 3. That is, in a state shown in Fig. 3B that substantially no soot is generated, the combustion pressure is lowered. Accordingly the combustion temperature in the combustion chamber 5 is lowered.

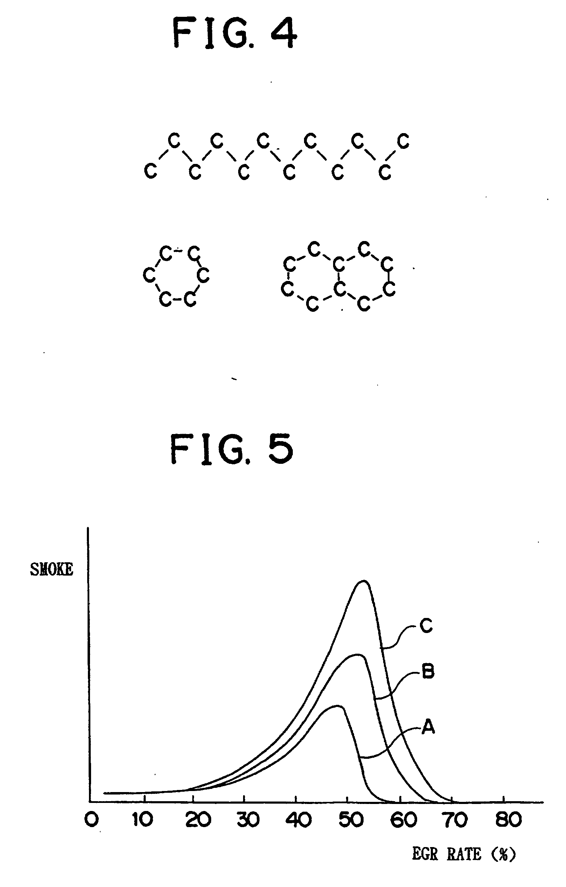

Secondly, when the generation amount of the smoke, that is, the generation amount of the soot becomes substantially 0, the discharge amount of HC and CO is increased as shown in Fig. 2. This can be said that the hydrocarbon is discharged without growing to the soot. That is, in a straight chain hydrocarbon or an aromatic hydrocarbon shown in Fig. 4 and contained in the fuel, when the temperature is increased in the presence of scarce oxygen, a precursor of the soot is formed by thermal decomposition, and the soot containing a solid mainly formed by an aggregation of carbon atoms is produced. In this case, an actual process of producing the soot is complex and it is indefinite what aspect the precursor of the soot forms. However, in any event, the hydrocarbon shown in Fig. 4 grows to the soot via the precursor of the soot. Accordingly, as mentioned above, when the generation amount of the soot becomes substantially 0, the discharge amount of HC and CO is increased as shown in Fig. 2. However, HC at this time corresponds to the precursor of the soot or the hydrocarbon in the preceding state.

After considerations on the basis of the experimental results shown in Figs. 2 and 3, when the combustion temperature in the combustion chamber 5 is low, the generation amount of the soot becomes substantially 0. The precursor of the soot or the hydrocarbon in the preceding state is discharged from the combustion chamber 5. As a result of further performing the experiments and researches with respect to the above subjects in detail, it becomes clear that the growing process of the soot stops on the way, that is, no soot is generated, in the case where the temperature of the fuel and the surrounding gas in the combustion chamber 5 is equal to or less than a predetermined temperature, and that the soot is generated when the temperature of the fuel and the surrounding gas in the combustion chamber 5 is equal to or more than the predetermined temperature.

In this case, the temperature of the fuel and the surrounding gas when the growing process of the hydrocarbon stops in a state of the precursor of the soot, that is, the predetermined temperature mentioned above is changed depending on various factors such as a kind of the fuel, a compression ratio of the air fuel ratio and the like. Therefore the predetermined temperature cannot be specified to the exact value. However, the certain temperature is closely related to the generation amount of NOx, so that the predetermined temperature can be defined by the generation amount of NOx at a certain level. That is, as the EGR rate is increased, the temperature of the fuel and the surrounding gas at the combustion is decreased. Therefore, the generation amount of NOx is reduced. At this time, the soot is hardly generated when the generation amount of NOx reaches near 10 p.p.m. (g/t) or less. Accordingly, the predetermined temperature mentioned above substantially coincides with the temperature when the generation amount of NOx reaches near 10 p.p.m. (g/t) or less.

Once the soot is generated, the soot can not purified by the post-treatment using the catalyst with an oxidation function. On the contrary, the precursor of the soot or the hydrocarbon in the preceding state can be easily purified by the post-treatment using the catalyst with the oxidation function. As mentioned above, considering the post-treatment by the catalyst with the oxidation function, there is a significantly great difference between discharging of the hydrocarbon from the combustion chamber 5 in the form of the precursor of the soot or the preceding state, and discharging of the hydrocarbon from the combustion chamber 5 in the form of the soot. The new combustion system employed in the present invention is mainly structured to discharge the hydrocarbon from the combustion chamber 5 in the form of the precursor of the soot or the preceding state without generating the soot in the combustion chamber 5 and oxidize the hydrocarbon by the catalyst with the oxidation function.

Further, in order to stop the growth of the hydrocarbon prior to generation of the soot, it is necessary to restrict the temperature of the fuel and the surrounding gas during combustion in the combustion chamber 5 to a temperature lower than the temperature at which the soot is generated. In this case, it is clearly understood that an endothermic effect of the gas around the fuel during combustion thereof affects the restriction of the temperature of the fuel and the surrounding gas to a substantially great degree.

That is, when only an air exists around the fuel, the evaporated fuel immediately reacts with the oxygen in the air for burning. In this case, the temperature of the air apart from the fuel is not increased so much, only the temperature around the fuel becomes locally increased to a significant degree. That is, at this time, the air apart from the fuel hardly gives an endothermic effect of the combustion heat in the fuel. In this case, since the combustion temperature becomes locally high to a significant degree, the soot is generated by the unburned hydrocarbon to which the combustion heat has been applied.

On the contrary, in the case where the fuel exists in the mixture of a large amount of inert gas and a small amount of air, the condition is slightly different from the aforementioned case. In this case, the evaporated fuel diffuses to the periphery and reacts with an oxygen contained in the inert gas in the mixture for burning. Since the combustion heat is absorbed by the peripheral inert gas, the combustion temperature is not increased so much. Accordingly it is possible to restrict the combustion temperature to substantially a low level. In order to restrict the combustion temperature, the inert gas is essential to restrict the combustion temperature to a low level because of its endothermic effect.

In order to restrict the temperature of the fuel and the surrounding gas to a temperature lower than the temperature at which the soot is generated, the amount of the inert gas has to be sufficient to absorb the thermal energy. Accordingly, when the fuel amount increases, the required amount of the inert gas also increases. Here, in this case, the greater the specific heat of the inert gas becomes, the stronger the endothermic effect is improved. It is preferable to use a gas with a great specific heat as the inert gas. In view of the aforementioned aspect, since CO₂ and the EGR gas have a relatively great specific heat, it is preferable to employ the EGR gas as the inert gas.

Fig. 5 shows a relation between the EGR rate and generation of the smoke when using the EGR gas as the inert gas and changing the cooling degree of the EGR gas. That is, in Fig. 5, a curve A shows the case where the EGR gas is strongly cooled so as to maintain the EGR gas temperature to 90 approximately, a curve B shows the case where the EGR gas is cooled by a compact cooling apparatus and a curve C shows the case where the EGR gas is not forcibly cooled.

As shown by the curve A in Fig. 5, when strongly cooling the EGR gas, the generation amount of the soot reaches the peak when the EGR rate is slightly lower than 50 %. In this case, the soot is hardly generated by setting the EGR rate to the level equal to or greater than 55 % approximately. Meanwhile, as shown by the curve B in Fig. 5, when cooling the EGR gas a little, the generation amount of the soot reaches the peak when the EGR rate is slightly higher than 50 %. In this case, the soot is hardly generated by setting the EGR rate to the level equal to or more than 65 % approximately.

Further, as shown by the curve C in Fig. 5, when the EGR gas is not forcibly cooled, the generation amount of the soot reaches the peak when the EGR rate is near 55 %. In this case, the soot is hardly generated by setting the EGR rate to the level equal to or more than 70 % approximately. In this case, Fig. 5 shows the generation amount of the smoke at comparatively higher engine load. When the engine load is reduced to a small value, the EGR rate at which the generation amount of the soot reaches the peak is slightly reduced, and a lower limit of the EGR rate at which the soot is hardly generated is also slightly reduced. As mentioned above, the lower limit of the EGR rate at which the soot is hardly generated varies with the cooling degree of the EGR gas and the engine load.

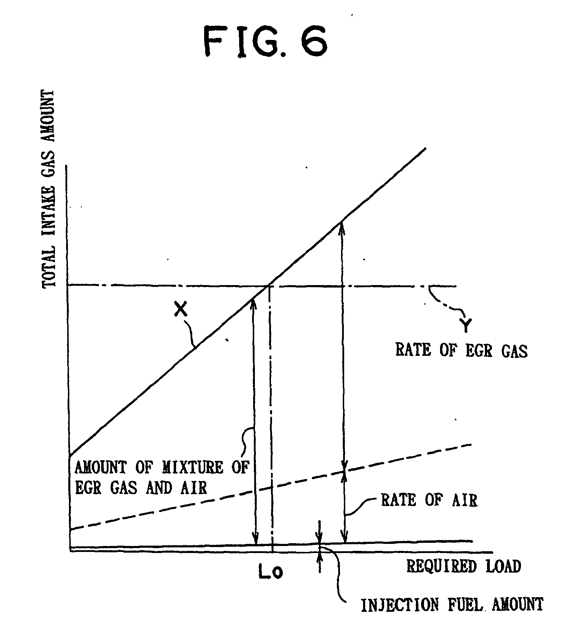

Fig. 6 shows, on the assumption of using the EGR gas for the inert gas, the amount of the mixture of the EGR gas and an air required for setting the temperature of the fuel and the surrounding gas at combustion to be lower than the temperature at which the soot is generated, a rate of the air in the mixture, and a rate of the EGR gas in the mixture. Here in Fig. 6, an axis of ordinates shows a total intake gas amount that is introduced in the combustion chamber 5, and a single dot chain line Y shows a total intake gas amount which can be introduced in the combustion chamber 5 in case of no supercharging. Further, an axis of abscissas represents a required load.

Referring to Fig. 6, the rate of the air, that is, the air amount in the mixture shows the amount of the air required for completely burning the injected fuel. That is, in the case shown in Fig. 6, a ratio between the air amount and the injection fuel amount corresponds to a stoichiometric air fuel ratio. Meanwhile, in Fig. 6, the rate of the EGR gas, that is, the EGR gas amount in the mixture shows the EGR gas amount required at the lowest for setting the temperature of the fuel and the surrounding gas to the temperature lower than the temperature at which the soot is generated during burning of the injected fuel. The EGR gas amount is equal to or more than 55 % of the EGR rate, and that of the embodiment shown in Fig. 6 is equal to or more than 70 %. That is, when setting the total intake gas amount introduced into the combustion chamber 5 to a solid line X in Fig. 6 and setting the rate between the air amount and the EGR gas amount among the total intake gas amount X to a rate shown in Fig. 6, the temperature of the fuel and the surrounding gas becomes lower than the temperature at which the soot is generated, and thereafter, substantially no soot is generated. Further, the generation amount of NOx at this time is about 10 p.p.m. (g/t) or less, so that the generation amount of NOx is significantly small.

Since the thermal energy during burning of the fuel is increased as the fuel injection amount is increased, in order to maintain the temperature of the fuel and the surrounding gas to the temperature lower than the temperature at which the soot is generated, it is required to increase the absorption amount of the heat due to the EGR gas. Accordingly, as shown in Fig. 6, the EGR gas amount should be increased in accordance that the injection fuel amount is increased. That is, the EGR gas amount should be increased as a required load becomes high.

Here, in the case of no supercharging, the upper limit of the amount X of the total intake gas introduced into the combustion chamber 5 is Y. In Fig. 6, in an area having a required load larger than L₀, the air fuel ratio can not be maintained to the stoichiometric air fuel ratio unless the EGR gas rate is reduced in accordance that the required load becomes greater. In other words, when intending to maintain the air fuel ratio to the stoichiometric air fuel ratio in the area having the desired load larger than L₀ in case of no supercharging, the EGR rate is reduced as the required load becomes high, and accordingly, in the area having the desired load larger than L₀, it is impossible to maintain the temperature of the fuel and the surrounding gas to the temperature lower than the temperature at which the soot is produced.

However, as shown in Fig. 1, when recirculating the EGR gas into the inlet of the supercharger, that is, the air intake pipe 17 of the exhaust turbo charger 15 via the EGR passage 29, in the area having the required load larger than L₀, it is possible to maintain the EGR rate to the level equal to or more than 55 %, for example, 70 %, so as to maintain the temperature of the fuel and the surrounding gas to the temperature lower than the temperature at which the soot is produced. That is, when recirculating the EGR gas so that the EGR rate within the air intake pipe 17 becomes, for example, 70 %, the EGR rate of the intake gas having a pressure increased by the compressor 16 of the exhaust turbo charger 15 also becomes 70 %. As a result, it is possible to maintain the temperature of the fuel and the surrounding gas lower than the temperature at which the soot is produced as far as the compressor 16 can increase the pressure. Accordingly, it is possible to expand the operation range of the engine which can produce the low temperature combustion.

In this case, when setting the EGR rate to the level equal to or more than 55 % in the area having the required load larger than Lo, the EGR control valve 31 is fully opened and the throttle valve 20 is slightly closed.

As mentioned above, Fig. 6 shows the case where the fuel is burned at the stoichiometric air fuel ratio, however, even when setting the air amount to the level less than the air amount shown in Fig. 6, that is, setting the air fuel ratio to the rich state, it is possible to restrict the generation amount of NOx to approximately 10 p.p.m. (g/t) or less while restricting generation of the soot. Further, even when setting the air amount to the level more than the air amount shown in Fig. 6, that is, setting the average value of the air fuel ratio in the lean state such as 17 to 18, it is possible to restrict the generation amount of NOx to approximately 10 p.p.m. (g/t) or less while restricting the generation of the soot.

That is, when the air fuel ratio is set to rich, the fuel becomes excessive, however, since the combustion temperature is restricted to be kept low, the excessive fuel does not grow to the soot, thus producing no soot. Further, only a significantly small amount of NOx is produced at this time. On the contrary, when the average air fuel ratio is lean, or even when the air fuel ratio is the stoichiometric air fuel ratio, a small amount of soot is produced when the combustion temperature becomes high. However, in accordance with the present invention, since the combustion temperature is restricted to be low, no soot is produced at all. Further, only a significantly small amount of NOx is produced.

As mentioned above, when the low temperature combustion is performed, the soot is not produced irrespective of the air fuel ratio, that is, the air fuel ratio is at the rich state or the stoichiometric air fuel ratio, or further, if the average air fuel ratio is at the lean state, leading to a significantly small amount of generated NOx. Accordingly, in view of the improvement of a specific fuel consumption, it can be said that it is preferable to set the average air fuel ratio to the lean state.

In this case, it is limited to an engine operated at the middle or low load at which the generation amount during combustion is relatively small to restrict the temperature of the fuel and the surrounding gas at a time of combustion in the combustion chamber to the level equal to or less than the temperature at which the growth of the hydrocarbon stops on the way. Accordingly, in the embodiment of the present invention, during the engine operation at a middle or low load, the temperature of the fuel and the surrounding gas during combustion is restricted to the temperature equal to or less than the temperature at which the growth of the hydrocarbon stops on the way so as to perform the first combustion mode, that is, the low temperature combustion. During the engine operation at a high load, the second combustion mode, that is, the conventional type combustion is carried out. In this case, the first combustion mode, that is, the low temperature combustion means the combustion in which the amount of the inert gas generated in the combustion chamber is greater than that of the inert gas at which the generation amount of the soot reaches the peak and the soot is hardly generated, as is apparent from the explanation mentioned above. The second combustion mode, that is, the conventional type combustion means a combustion in which the amount of the inert gas in the combustion chamber is smaller than the amount of the inert gas at which the generation amount of the soot reaches the peak.

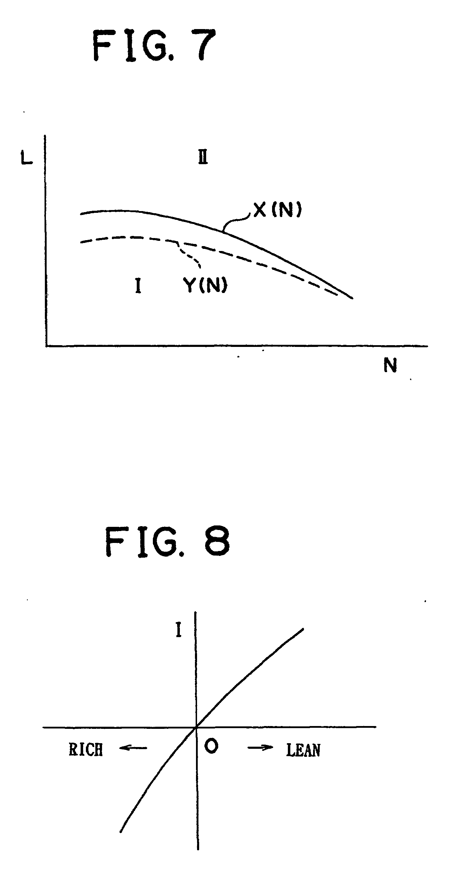

Fig. 7 shows a first operation area I in which the first combustion mode, that is, the low temperature combustion is performed and a second operation area II in which the second combustion mode, that is, the combustion in accordance with the conventional combustion method is performed. In this case, in Fig. 7, a vertical axis L shows a depression amount of an acceleration pedal 50, that is, the required load, and an axis of abscissas N shows an engine speed. Further, in Fig. 7, X(N) shows a first boundary between the first operation area I and the second operation area II, and Y(N) shows a second boundary between the first operation area I and the second operation area II. A change in the operation area from the first operation area I to the second operation area II is judged on the basis of the first boundary X(N), and a change in the operation area from the second operation area II to the first operation area I is judged on the basis of the second boundary Y(N).

That is, when the required load L exceeds the first boundary X(N) corresponding to a function of the engine speed N while the engine operation state exists in the first operation area I during low temperature combustion, it is judged that the operation area is switched to the second operation area II. Therefore the combustion of the conventional type is carried out. Next, when the required load L becomes lower than the second boundary Y (N) corresponding to a function of the engine speed N, it is judged that the operation area is switched to the first operation area I. Therefore the low temperature combustion is carried out again.

As mentioned above, two boundaries, the first boundary X(N) and the second boundary Y (N) closer to the lower load than the first boundary X(N), are provided for the following two reasons. First, as the combustion temperature is relatively high at the high load side in the second operation area II, the low temperature combustion cannot be carried out immediately even when the required load L becomes lower than the first boundary X(N). This is because the low temperature combustion is immediately started only when the required load L becomes significantly low, that is, lower than the second boundary Y(N). Second, the hysteresis is provided with respect to the change of the operation area between the first operation area I and the second operation area II.

In this case, when the engine operation state is within the first operation area I where the low temperature combustion is carried out, the soot is not generated but unburned hydrocarbon is discharged from the combustion chamber 5 in the form of the precursor of the soot or the state prior thereto. At this time, the unburned hydrocarbon discharged from the combustion chamber 5 is well oxidized by the catalyst 25 with the oxidation function. As the catalyst 25, an oxidation catalyst, a three-way catalyst or an NOx absorbent can be employed. The NOx absorbent has a function of absorbing NOx when the average air fuel ratio in the combustion chamber 5 is lean, and discharging NOx when the average air fuel ratio in the combustion chamber 5 becomes rich.

The NOx absorbent is prepared by carrying at least one selected from an alkaline metal such as a potassium K, a sodium Na, a lithium Li and a cesium Cs, an alkaline earth metal such as a barium Ba and a calcium Ca and a rare earth metal such as a lanthanum La and an yttrium Y, and a noble metal such as a platinum Pt on, for example, alumina set as a carrier.

Not only the oxidation catalyst, but also the three-way catalyst and the NOx absorbent have the oxidation function. Therefore, as mentioned above, the three-way catalyst and the NOx absorbent can be used as the catalyst 25.

Fig. 8 shows an output of the air fuel ratio sensor 27. As shown in Fig. 8, an output current I of the air fuel ratio sensor 27 varies with the air fuel ratio A/F. Accordingly, the air fuel ratio can be derived from the output current I of the air fuel ratio sensor 27.

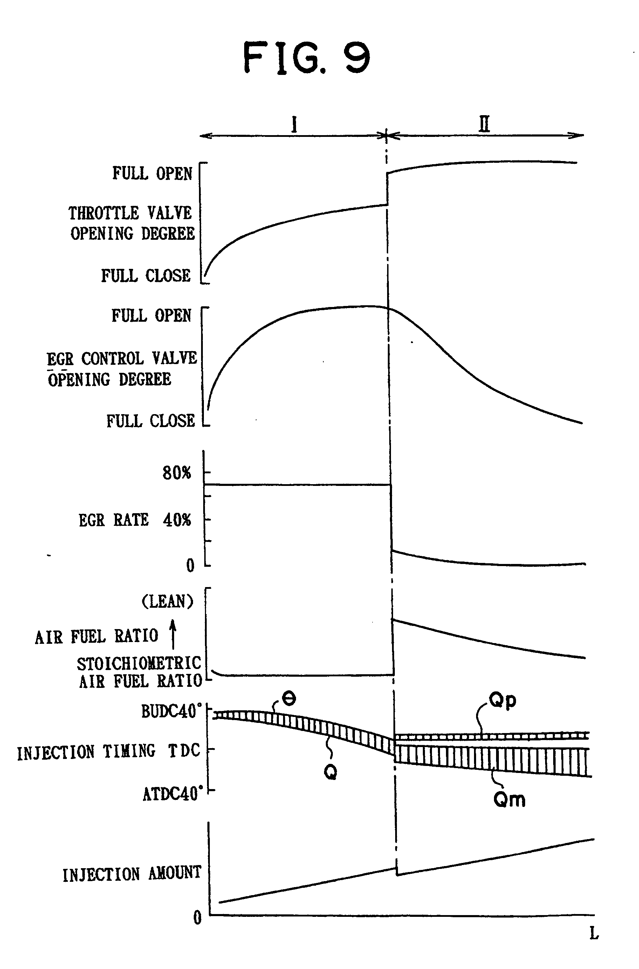

Next, an operation control in the first operation area I and the second operation area II will be briefly described below referring to Fig. 9.

Fig. 9 shows an opening degree of the throttle valve 20, an opening degree of the EGR control valve 31, an EGR rate, an air fuel ratio, an injection timing and an injection amount at the required load L. As shown in Fig. 9, in the first operation area I at the required load L which is low, the opening degree of the throttle valve 20 is gradually increased to approximately two-third of full open state from a nearly full closed state according to the increase in the required load L , and the opening degree of the EGR control valve 31 is gradually increased to a full open state from a nearly full closed state according to the increase in the required load L. Further, in the embodiment shown in Fig. 9, the EGR rate is set to approximately 70 % in the first operation area I, and the air fuel ratio is set to a slight lean air fuel ratio.

In other words, in the first operation area I, the opening degree of the throttle valve 20 and the opening degree of the EGR control valve 31 are controlled such that the EGR rate becomes approximately 70 % and the air fuel ratio becomes a slight lean air fuel ratio. In this case, at this time, the air fuel ratio is controlled to a target lean air fuel ratio by compensating the opening degree of the EGR control valve 31 on the basis of the output signal of the air fuel ratio sensor 27. Further, in the first operation area I, a fuel injection is carried out before reaching a compression top dead center TDC. In this case, an injection start timing is delayed according to the increase in the required load L.

Further, during idling operation, the throttle valve 20 is closed to a full closed state, and concurrently the EGR control valve 31 is also closed to a full closed state. When closing the throttle valve 20 to the full closed state, a pressure in the combustion chamber 5 at the beginning of compression is lowered, resulting in the low compression pressure. When the compression pressure becomes low, the compression exerted by the piston 4 is lowered to reduce vibration of the main body 1 or the engine. That is, during idling operation, as the vibration of the main body 1 of the engine is restricted, the throttle valve 20 is closed nearly to the fully closed state.

On the contrary, when the operation area of the engine changes from the first operation area I to the second operation area II, the opening degree of the throttle valve 20 is increased stepwise from about two-third to the fully open state. At this time, in the embodiment shown in Fig. 9, the EGR rate is reduced from approximately 70 % to 40 % or less stepwise so as to skip over a range of the EGR rate (Fig. 5) at which a large amount of smoke is generated, and the air fuel ratio is increased stepwise.

In the second operation area II, the second combustion mode, that is, the conventional type combustion is carried out. In accordance with this combustion type, a small amount of soot and NOx are generated, however, the thermal efficiency is higher than that of the low temperature combustion. Therefore, when the operation area of the engine changes from the first operation area I to the second operation area II, the injection amount is reduced stepwise as shown in Fig. 9.

In the second operation area II, the conventional type combustion is carried out. In this second operation area II, the throttle valve 20 is kept in the fully open state except a portion thereof, and the opening degree of the EGR control valve 31 is gradually reduced as the required load L becomes high. Further, in this operation area II, the EGR rate becomes low as the required load L becomes high, and the air fuel ratio becomes small as the required load L becomes high. However, the air fuel ratio is set to lean even when the required load L becomes high. Further, in the second operation area II, a pilot injection Qp is carried out prior to a main injection Qm.

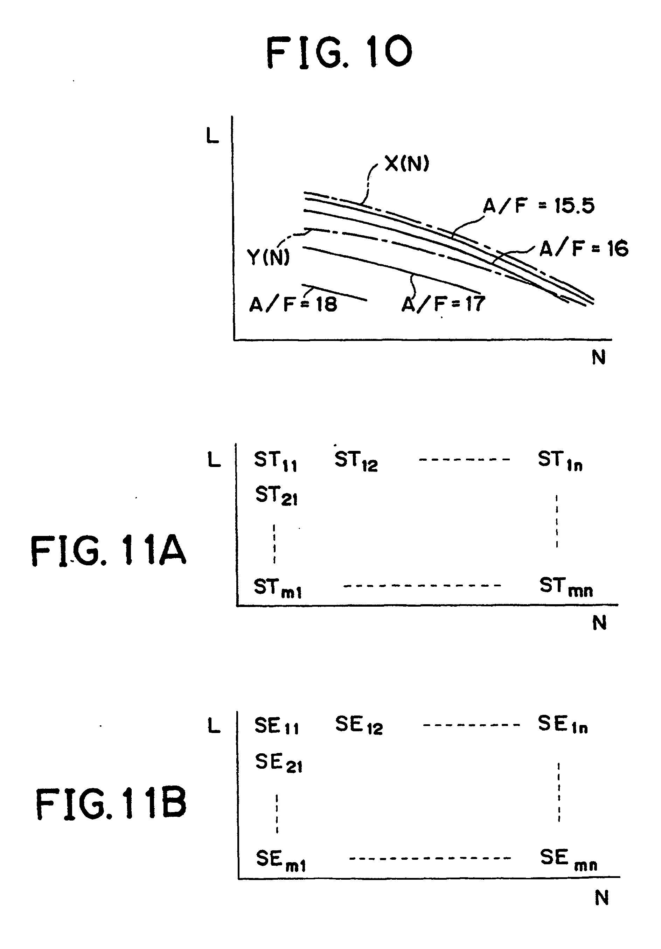

Fig. 10 shows an air fuel ratio A/F in the first operation area I. In Fig. 10, curves indicated by A/F = 15.5, A/F = 16, A/F = 17 and A/F = 18 respectively show states having air fuel ratios 15.5, 16, 17 and 18, each of the air fuel ratios between the curves is defined in accordance with a proportional allotment. As shown in Fig. 10, the air fuel ratio becomes lean in the first operation area I, and further, in the first operation area I, the air fuel ratio A/F is set to lean as the required load L becomes low.

That is, the amount of the thermal heat caused by the combustion is reduced as the reduction of the required load L becomes low. Accordingly, the low temperature combustion can be performed even when lowering the EGR rate as the required load L becomes low. When lowering the EGR rate, the air fuel ratio becomes large, so that as shown in Fig. 10, the air fuel ratio A/F is made large as the required load L becomes low. As the air fuel ratio A/F is increased, the specific fuel consumption is improved, so that in order to make the air fuel ratio as lean as possible, in accordance with the embodiment of the present invention, the air fuel ratio A/F is made large as the required load L becomes low.

In this case, a target opening degree ST of the throttle valve 20 necessary for setting the air fuel ratio to the target air fuel ratio shown in Fig. 10 is previously stored within the ROM 42 as a function of the required load L and the engine speed N in the form of a map as shown in Fig. 11A, and a target opening degree SE of the EGR control valve 31 necessary for setting the air fuel ratio to the target air fuel ratio shown in Fig. 10 is previously stored within the ROM 42 as a function of the required load L and the engine speed N in the form of a map as shown in Fig. 11B.

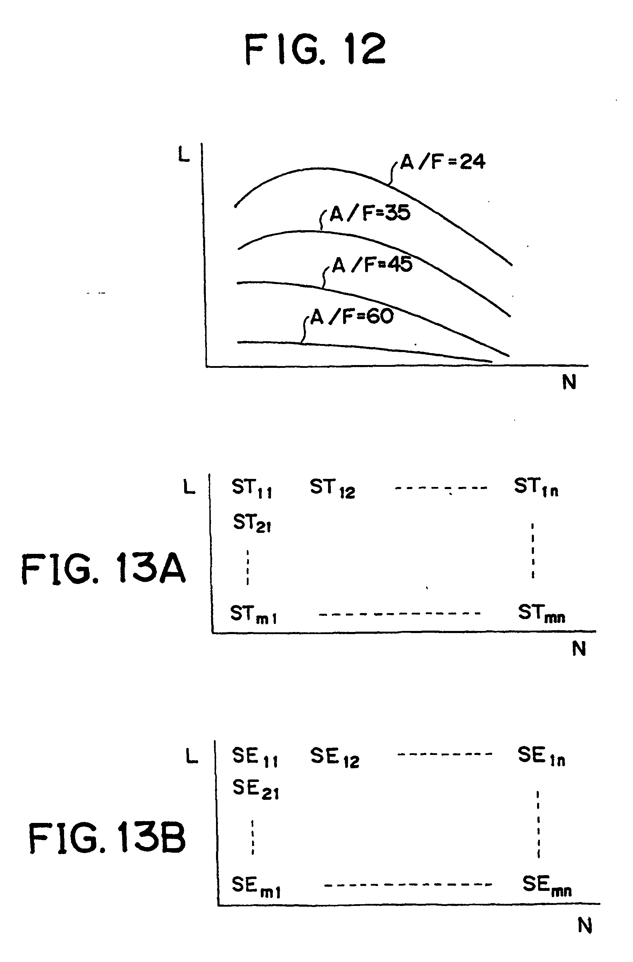

Fig. 12 shows a target air fuel ratio when the second combustion mode, that is, the combustion in accordance with the conventional combustion method is performed. In this case, in Fig. 12, curves indicated by A/F = 24, A/F = 35, A/F = 45 and A/F = 60 respectively show states having target air fuel ratios 24, 35, 45 and 60. A target opening degree ST of the throttle valve 20 necessary for setting the air fuel ratio to the target air fuel ratio is previously stored within the ROM 42 as a function of the required load L and the engine speed N in the form of a map as shown in Fig. 13A, and a target opening degree SE of the EGR control valve 31 necessary for setting the air fuel ratio to the target air fuel ratio is previously stored within the ROM 42 as a function of the required load L and the engine speed N in the form of a map as shown in Fig. 13B.

As shown in Fig. 9, when the first combustion mode is performed in the first operation area I, a fuel injection Q is performed for only one time at the closing stage of the compression stroke, and when the second combustion mode is performed in the second operation area II, the pilot injection Qp is performed prior to the main injection Qm as mentioned above. As shown in Fig. 9, the injection amount of the fuel injection Q, the injection amount of the main injection Qm and the injection amount of the pilot injection Qp are increased as the required load L becomes high.

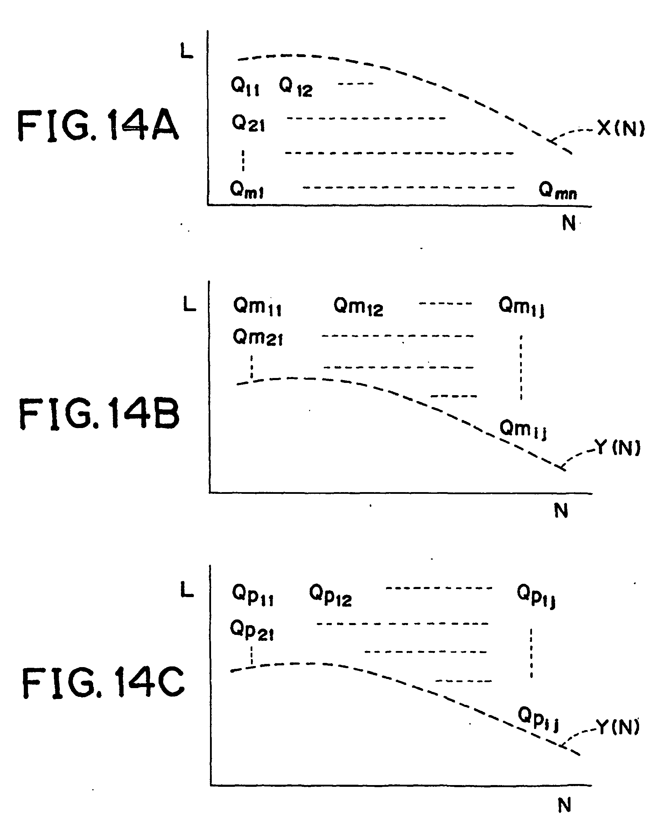

Actually, the injection amount of the fuel injection Q is a function of the required load L and the engine speed N, and the injection amount Q is previously stored within the ROM 42 as the function of the required load L and the engine speed N in the form of a map as shown in Fig. 14A. In the same manner, the injection amount of the main injection Qm is a function of the required load L and the engine speed, and the injection amount Qm is also previously stored within the ROM 42 as the function of the required load L and the engine speed N in the form of a map as shown in Fig. 14B. Further, the injection amount of the pilot injection Qp is a function of the required load L and the engine speed, and the injection amount Qp is also previously stored within the ROM 42 as the function of the required load L and the engine speed N in the form of a map as shown in Fig. 14C.

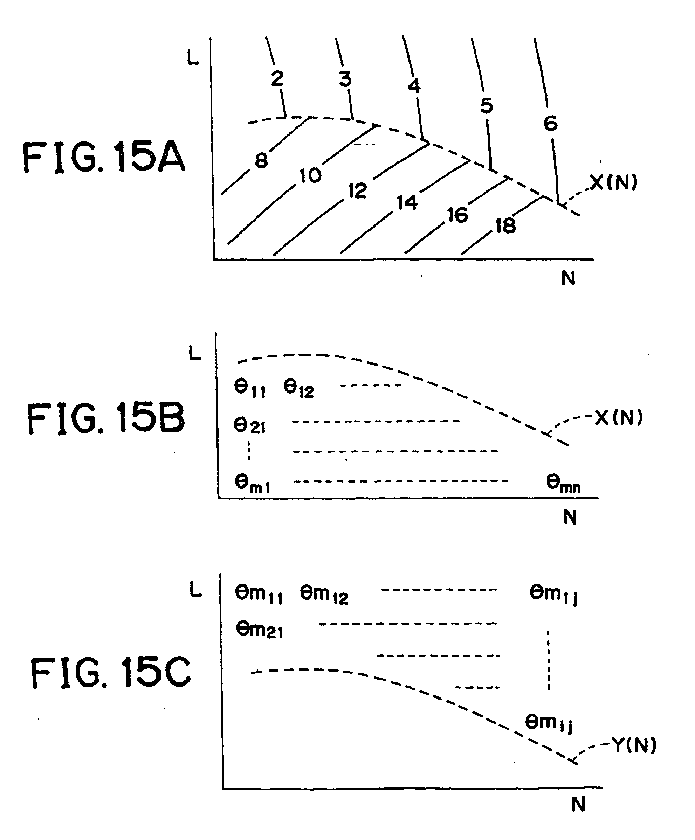

On the contrary, Fig. 15A shows an injection start timing of the fuel injection Q and an injection start timing of the main injection Qm. That is, in Fig. 15A, a side close to the low load from the first boundary X (N) shows the injection start timing of the fuel injection Q, and a side close to the high load from the first boundary X (N) shows the injection start timing of the main injection Qm. Here, in Fig. 15A, each of numerical values shows a crank angle of a before top dead center, and each of solid lines shows a uniform injection start timing.

Since the first combustion mode, that is, the low temperature combustion is performed in a state that the EGR rate is high, the combustion is slow, so that at this time, when setting the injection start timing to be late as the injection start timing of the main injection Qm, a good combustion can not be obtained, and accordingly, a misfire is generated. Therefore, as is understood from Fig. 15A, the injection start timing under the first combustion mode is advanced in comparison with the injection start timing of the main injection Qm under the second combustion mode.

In this case, this matter can be applied to the case of performing the fuel injection for only one time under the second combustion mode, and also in this case, the injection start timing under the first combustion mode is advanced in comparison with the injection start timing under the second combustion mode. Accordingly, when switching from the first combustion mode to the second combustion mode, the injection start timing is delayed, and when switching from the second combustion mode to the first combustion mode, the injection start timing is advanced.

As is understood from Fig. 15A, the injection start timing when the first combustion mode is performed is a function of the required load L and the engine speed N, and the injection start timing θ is previously stored within the ROM 42 as a function of the required load L and the engine speed N in the form of a map as shown in Fig. 15B. Further, as is understood from Fig. 15A, the injection start timing of the main injection Qm is a function of the required load L and the engine speed N, and the injection start timing θm is also previously stored within the ROM 42 as a function of the required load L and the engine speed N in the form of a map as shown in Fig. 15C.

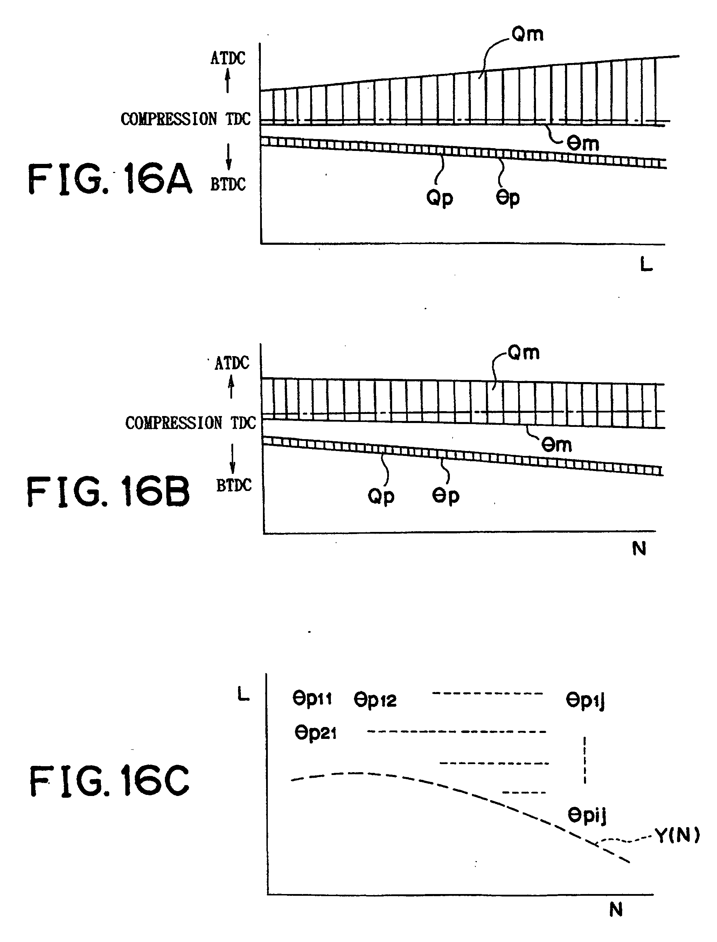

Fig. 16A shows the change in the injection start timing θm of the main injection Qm and the change in the injection start timing θp of the pilot injection Qp in the case where the required load L changes at a fixed engine speed N, and Fig. 16B shows the change in the injection start timing θm of the main injection Qm and the change in the injection start timing θp of the pilot injection Qp in the case where the engine speed N changes at the fixed required load L. As is understood from Figs. 16A and 16B, the injection start timing θp of the pilot injection Qp is a function of the required load L and the engine speed N, and the injection start timing θp is previously stored within the ROM 42 as a function of the required load L and the engine speed N in the form of a map as shown in Fig. 16C.

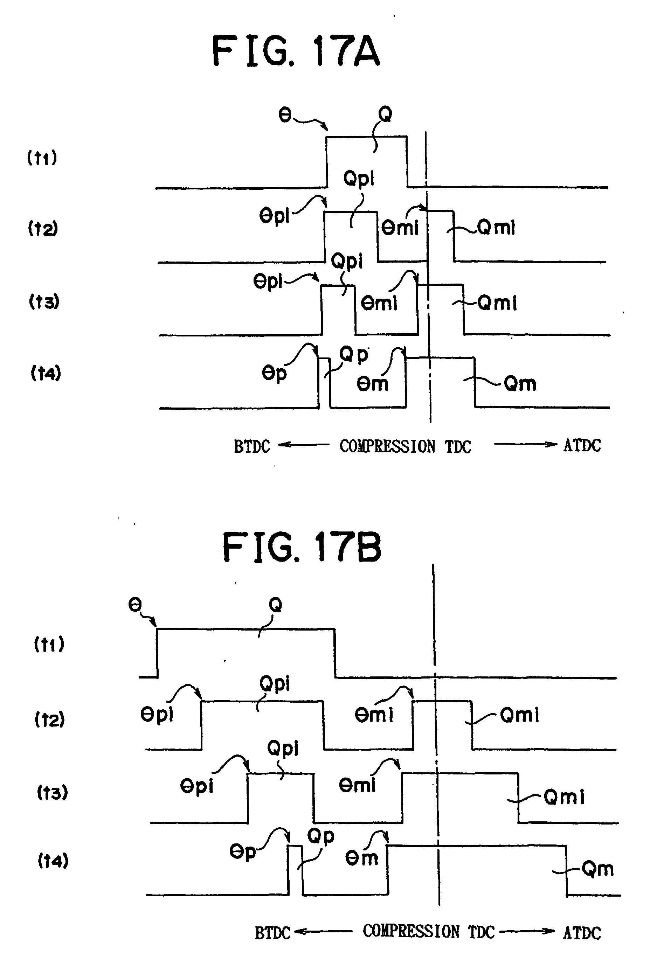

Next, the control of an injection amount and an injection start timing at switching from the first combustion mode to the second combustion mode will be described hereinafter referring to Figs. 17A and 17B.

As mentioned above, at switching from the first combustion mode to the second combustion mode, the EGR rate is lowered by opening the throttle valve 20, for example, from 70 % to 40 % or less. However, at this time, the EGR rate is not immediately lowered due to delay in the increase of the intake air amount or the like, a predetermined length of time is required until the EGR rate is lowered from 70 % to 40 % or less. That is, when switching from the first combustion mode to the second combustion mode, the EGR rate suitable for the first combustion mode is gently changed from the EGR rate suitable for the second combustion mode. Accordingly, when switching from the first combustion mode to the second combustion mode, it is preferable to gradually change the injection amount and the injection start timing suitable for the first combustion mode to those suitable for the second combustion mode.

Then, in accordance with the embodiment of the present invention, as shown in Figs. 17A and 17B, when switching from the first combustion mode to the second combustion mode, an injection start timing θmi of a main injection and an injection start timing θpi of a pilot injection are gradually changed by gradually increasing the main injection amount Qmi and gradually decreasing the pilot injection amount Qpi. In this case, Figs. 17A and 17B show the change in an injection period as an elapse of time from t1 to t4. Further, Fig. 17A shows a state in which the engine speed N is relatively low, and Fig. 17B shows a state in which the engine speed N is relatively high. In Figs. 17A and 17B, as an axis of abscissas shows a crank angle, even when the same amount of fuel is injected, an injection period is extended as the engine speed increases.

In Figs. 17A and 17B, t1 shows an injection period when the first combustion mode is carried out, t2 and t3 show a step on the way proceeding from the first combustion mode to the second combustion mode, and t4 shows a time of completing switching to the second combustion mode. As shown in Figs. 17A and 17B, when switching from the first combustion mode to the second combustion mode, the main injection amount Qmi is gradually increased to the final main injection amount Qm, and the pilot injection amount Qpi is gradually reduced from the injection amount Q under the first combustion mode to the final pilot injection amount Qp. Further, in t2 and t3, it is not always appropriate in a technical view to refer Qmi as the main injection and refer Qpi as the pilot injection. However, for the purpose of easy understanding, in the specification of the present application, the former injection carried out in the way of switching from the first combustion mode to the second combustion mode is referred as the pilot injection, and the latter injection carried out is referred as the main injection.

On the contrary, when switching from the first combustion mode to the second combustion mode, the injection start timing θmi of the main injection is gradually advanced to the final injection start timing θm.

Further, when switching from the first combustion mode to the second combustion mode, the injection start timing θpi of the pilot injection is gradually changed from the injection start timing θ under the first combustion mode to the final injection start timing θp under the second combustion mode.

In this case, when the engine speed N is low, as shown in Fig. 15A, the injection start timing θ under the first combustion mode is relatively late. At this time, as shown in Fig. 17A, the injection start timing θpi of the pilot injection is gradually advanced. Comparatively, when the engine speed N is high, as shown in Fig. 15A, the injection start timing θunder the first combustion mode is relatively early. At this time, as shown in Fig. 17B, the injection start timing θpi of the pilot injection is gradually delayed.

When switching from the second combustion mode to the first combustion mode, the injection period is changed from t4 to t1 in Figs. 17A and 17B. Accordingly, when switching from the second combustion mode to the first combustion mode, the main injection amount Qmi is gradually reduced, the pilot injection amount Qpi is gradually increased so as to gradually change the injection start timing θmi of the main injection and the injection start timing θpi of the pilot injection.

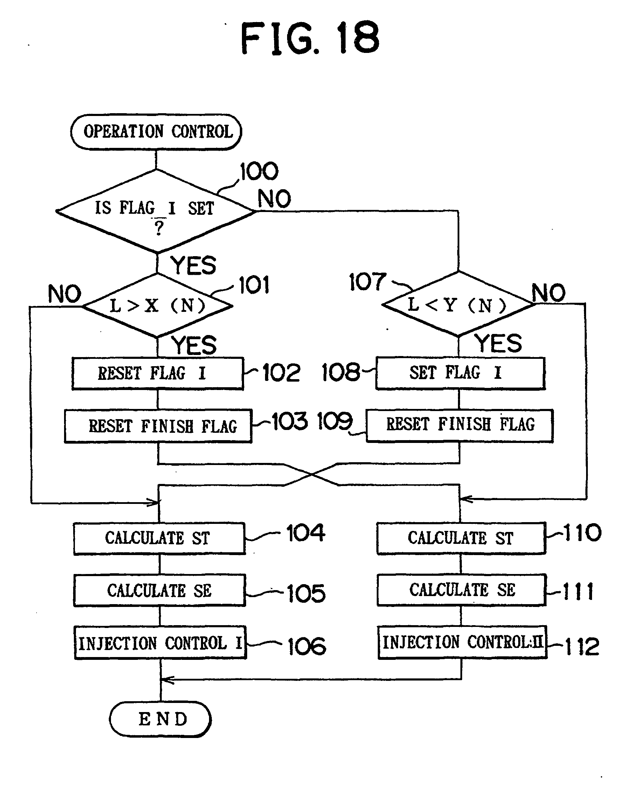

Next, an operation control will be described below with respect to Fig. 18.

Referring to Fig. 18, first in step 100, it is judged whether or not a flag I indicating that the operation state of the engine is in the first operation area I is set. When the flag I is set, that is, the operation state of the engine is in the first operation area I, the process proceeds to step 101 where it is judged whether or not the required load L becomes greater than the first boundary X1 (N). If L ≤ X1 (N), the process proceeds to step 104 where the low temperature combustion is carried out.

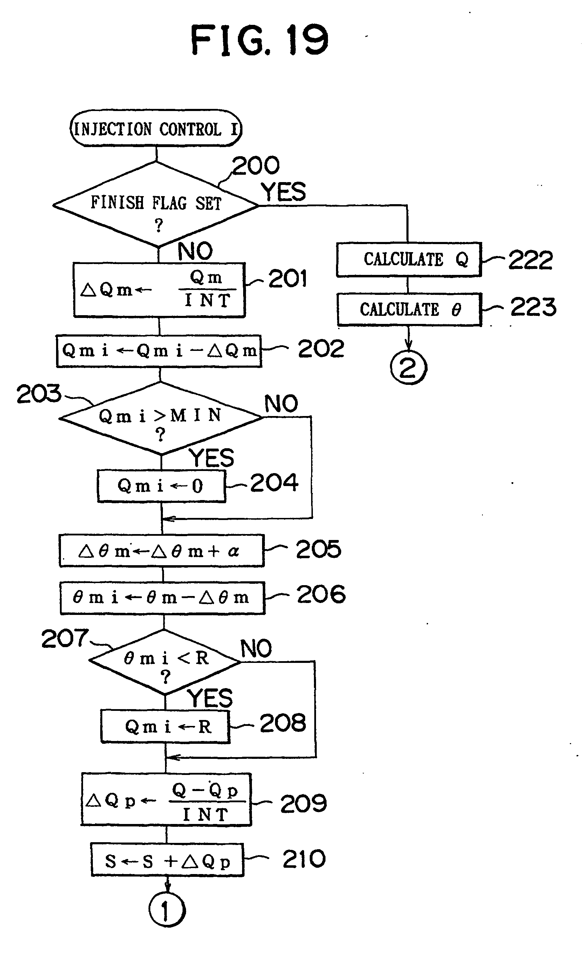

That is, in step 104, the target opening degree ST of the throttle valve 20 is calculated from the map shown in Fig. 11A, and the opening degree of the throttle valve 20 is set to the target opening degree ST. Next, in step 105, the target opening degree SE of the EGR control valve 31 is calculated from the map shown in Fig. 11B, and the opening degree of the EGR control valve 31 is set to the target opening degree SE. Next, in step 106, the injection control I shown in Fig. 19 is carried out.

On the contrary, if L > X (N) in step 101, the program goes to step 102 and the flag I is reset, and the program goes to step 103 where a completion flag indicating that the injection control at switching between the first combustion mode and the second combustion mode is completed is reset. Next, the program goes to step 110 where the second combustion mode is carried out.

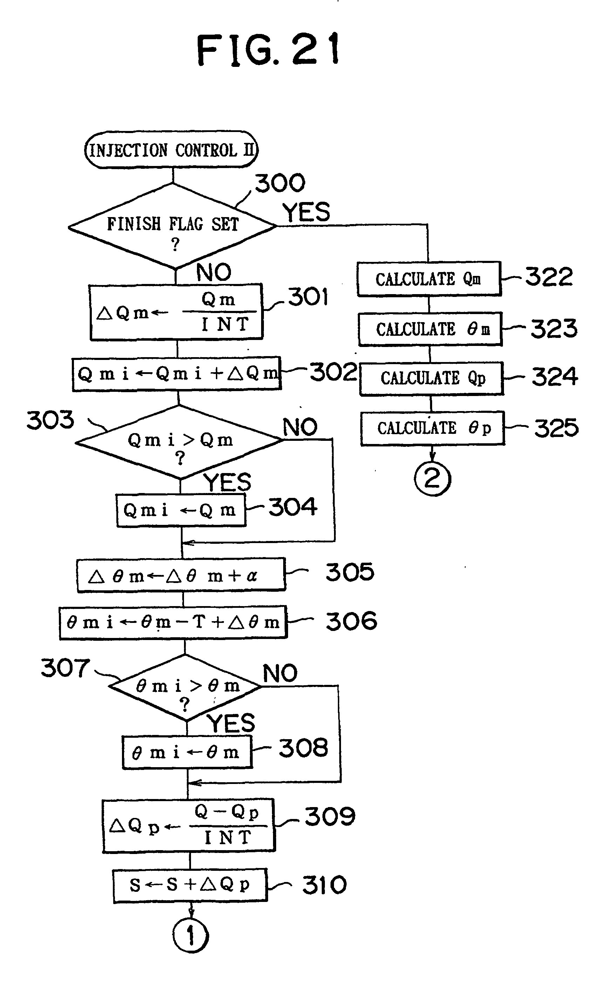

That is, in step 110, the target opening degree ST of the throttle valve 20 is calculated from the map shown in Fig. 13A, and the opening degree of the throttle valve 20 is set to the target opening degree ST. Next, in step 111, the target opening degree SE of the EGR control valve 31 is calculated from the map shown in Fig. 13B, and the opening degree of the EGR control valve 31 is set to the target opening degree SE. Next, in step 112, the injection control II shown in Fig. 21 is carried out.

When the flag I is reset, the process proceeds from step 100 to step 107 in the next processing cycle, where it is judged whether or not the required load L becomes lower than the second boundary Y (N). If L ≥ Y (N), the process proceeds to step 110, and the second combustion mode is carried out.

On the contrary, in step 107, if L < Y (N), the process proceeds to step 108, the flag I is set, and further proceeds to step 109 where a completion flag is reset. Then the process proceeds to step 104 where the injection control I, that is, the low temperature combustion is carried out.

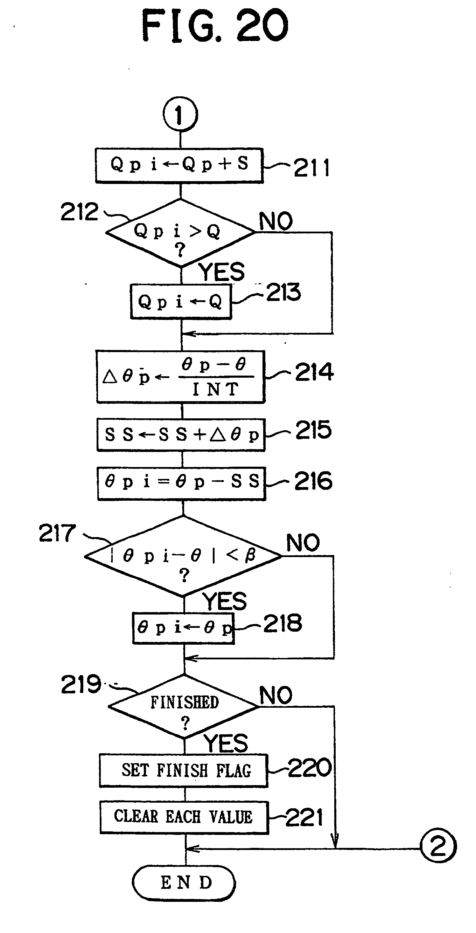

Next, the injection control I will be described below with reference to Figs. 19 and 20.

With reference to Figs. 19 and 20, first, in step 200, it is judged whether or not a completion flag is set. Since the completion flag is reset at switching from the second combustion mode to the first combustion mode, the process proceeds to step 201 when switching to the first combustion mode from the second combustion mode.

In step 201, the main injection amount Qm immediately before switching from the second combustion mode to the first combustion mode is divided by a fixed integral number INT, and the divided result is set to ΔQm. Next, in step 202, ΔQm is subtracted from the main injection amount Qmi. In step 203, it is judged whether or not the main injection amount Qmi becomes smaller than the minimum value MIN. If Qmi < MIN, the process proceeds to step 204, and the main injection amount Qmi is set to 0. Accordingly, it is understood that when switching from the second combustion mode to the first combustion mode, the main injection amount Qmi is gradually reduced.

Next, in step 205, a fixed value α is added to Δθm. Next, in step 206, Δθm is subtracted from the injection start timing θm of the main injection immediately before switching from the second combustion mode to the first combustion mode, such that the subtracted result is set to the injection start timing θmi of the main injection. Next, in step 207, it is judged whether or not the injection start timing θmi of the main injection becomes smaller, that is, delayed from a predetermined injection start timing R. If θmi < R , the process proceeds to step 208 and θmi is set as R. Accordingly, it is understood that when switching from the second combustion mode to the first combustion mode, the injection start timing mi of the main injection is gradually delayed.

Next, in step 209, the remainder (Q - Qp) between the injection amount Q under the first combustion mode and the pilot injection amount Qp immediately before switching from the second combustion mode to the first combustion mode is divided by the fixed integral number INT, and the divided result is set to ΔQp. Next, in step 210, ΔQp is added to an integrated value S. Next, in step 211, the integrated value S is added to the pilot injection amount Qp, and the added result is set to the pilot injection amount Qpi. Next, in step 212, it is judged whether or not the pilot injection amount Qpi becomes larger than the injection amount Q under the first combustion mode. If Qpi > Q, the process proceeds to step 213 where the pilot injection amount Qpi is set as Q. Accordingly, it is understood that when switching from the second combustion mode to the first combustion mode, the pilot injection amount Qpi is gradually increased.

Next, in step 214, the remainder (θp - θ) between the injection start timing θp of the pilot injection immediately before switching from the second combustion mode to the first combustion mode and the injection start timing θ under the first combustion mode is divided by the fixed integral number INT, and the divided result is set to Δθp. Next, in step 215, p is added to the integrated value SS. Next, in step 216, the integrated value SS is subtracted from the injection start timing θp of the pilot injection, and the subtracted result is set to the injection start timing θpi of the pilot injection. Next, in step 217, it is judged whether or not an absolute value |θpi - θ| of the remainder between the injection start timing θpi of the pilot injection and the injection start timing θ under the first combustion mode becomes smaller than a fixed value β, and if |θpi - θ| < β, the process proceeds to step 218, and the injection start timing θpi of the pilot injection is set as θ. Accordingly, it is understood that when switching from the second combustion mode to the first combustion mode, the injection start timing θpi of the pilot injection is gradually changed.

Next, in step 219, it is judged whether or not Qmi is set to 0 in step 204, whether or not θmi is set as R in step 208, whether or not Qpi is set as Q in step 213 and whether or not θpi is set as θ in step 218, that is, whether or not switching to the first combustion mode is completed. Upon completion of the switching to the first combustion mode, the process proceeds to step 220 and a completion flag is set, and next, in step 221, Qmi, Δθm, S and SS are set to 0.

When the completion flag is set, the process proceeds to step 222 from step 200 and the injection amount Q is calculated from the map shown in Fig. 14A. Next, the process proceeds to step 223 where the injection start timing θ is calculated from the map shown in Fig. 15B. Accordingly, at this time, the first combustion mode is carried out.

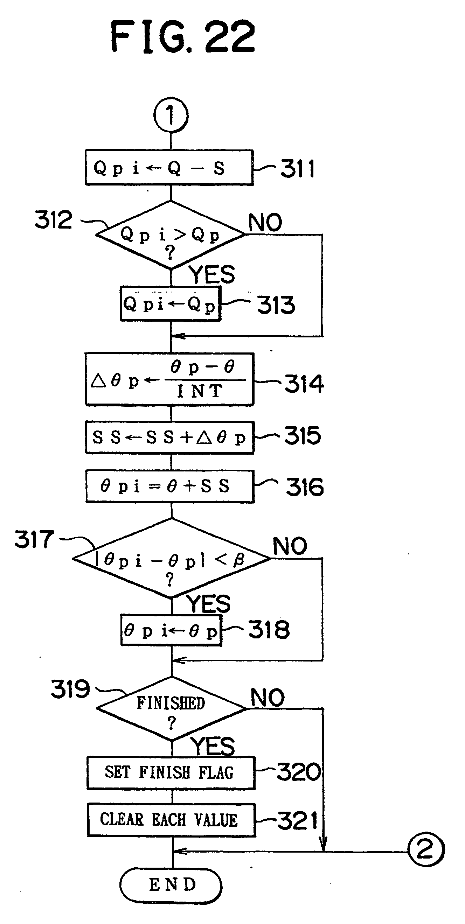

Next, an injection control II will be described below referring to Figs. 21 and 22.

With reference to Figs. 21 and 22, first, in step 300, it is judged whether or not the completion flag is set. Since the completion flag is reset at switching from the first combustion mode to the second combustion mode, the process proceeds to step 301 when switching from the first combustion mode to the second combustion mode.

In step 301, the main injection amount Qm immediately after switching from the first combustion mode to the second combustion mode is divided by the fixed integral number INT, and the divided result is set to ΔQm. Next, in step 302, Qm is added to the main injection amount Qmi. Next, in step 303, it is judged whether or not the main injection amount Qmi becomes greater than the injection amount Qm under the second combustion mode. If Qmi > Qm, the process proceeds to step 304 where the main injection amount Qmi is set as Qm. Accordingly, it is understood that when switching from the first combustion mode to the second combustion mode, the main injection amount Qmi is gradually increased.

Next, in step 305, a fixed value is added to Δθm. Next, in step 306, a predetermined period T is subtracted from the injection start timing θm of the main injection immediately after switching from the first combustion mode to the second combustion mode and θm is added, and the calculated result is set to the injection start timing θmi of the main injection. Next, in step 307, it is judged whether or not the injection start timing θmi of the main injection becomes greater, that is, earlier than the injection start timing θm of the main injection under the second combustion mode. If θmi > θm, the process proceeds to step 308 where θm is set to θmi. Accordingly, it is understood that when switching from the first combustion mode to the second combustion mode, the injection start timing θmi of the main injection is gradually advanced.

Next, in step 309, the remainder (Q - Qp) between the injection amount Q under the first combustion mode and the pilot injection amount Qp immediately after switching from the first combustion mode to the second combustion mode is divided by the fixed integral number INT, and the divided result is set to ΔQp. Next, in step 310, ΔQp is added to an integrated value S. Next, in step 311, the integrated value S is subtracted from the pilot injection amount Qp, and the subtracted result is set to the pilot injection amount Qpi. Next, in step 312, it is judged whether or not the pilot injection amount Qpi becomes smaller than the pilot injection amount Qp under the second combustion mode. If Qpi < QP, the process proceeds to step 313 where the pilot injection amount Qpi is set as QP. Accordingly, it is understood that when switching from the first combustion mode to the second combustion mode, the pilot injection amount Qpi is gradually reduced.

Next, in step 314, the remainder (θp - θ) between the injection start timing θp of the pilot injection immediately after switching from the first combustion mode to the second combustion mode and the injection start timing θ under the first combustion mode is divided by the fixed integral number INT, and the divided result is set to Δθp. Next, in step 315, Δθp is added to the integrated value SS. Next, in step 316, the integrated value SS is added to the injection start timing under the first combustion mode, and the added result is set to the injection start timing θpi of the pilot injection. Next, in step 317, it is judged whether or not an absolute value |θpi - θp| of the remainder between the injection start timing θpi of the pilot injection and the injection start timing θp of the pilot injection under the second combustion mode becomes smaller than a fixed value β, and if |θpi - θp| < β, the process proceeds to step 318 where the injection start timing θpi of the pilot injection is set as θp. Accordingly, it is understood that when switching from the first combustion mode to the second combustion mode, the injection start timing θpi of the pilot injection is gradually changed.

Next, in step 319, it is judged whether or not Qmi is set as Qm in step 304, whether or not θmi is set to θm in step 308, whether or not Qpi is set as Qp in step 313 and whether or not θpi is set as θp in step 318, that is, whether or not switching to the second combustion mode is completed. Upon completion of the switching to the second combustion mode, the process proceeds to step 320 where a completion flag is set, and next, in step 321, Qmi, Δθm, S and SS are set to 0.

When the completion flag is set, the process proceeds from step 300 to step 322 where the main injection amount Qm is calculated from the map shown in Fig. 15C, and next, the process proceeds to step 323 and the injection start timing θm of the main injection is calculated from the map shown in Fig. 15C. Next, the process proceeds to step 324 where the pilot injection amount Qp is calculated from the map shown in Fig. 14C, and next, the process proceeds to step 325 where the injection start timing θp of the pilot injection is calculated from the map shown in Fig. 16C. Accordingly, at this time, the second combustion mode is performed.

In accordance with the first embodiment of the present invention, in the case of switching from the first combustion mode to the second combustion mode, since the throttle valve 20 is opened stepwise, it is structured such that the EGR rate skips the peak area where the soot is generated (Fig. 5). However, actually, the EGR rate immediately becomes the one at which the generation amount of the soot reaches the peak. Therefore, there is a case that the soot may be temporarily generated in the combustion chamber 5.

In addition to the structure shown in the embodiment of the present invention, it is possible to add a soot trapping apparatus including a particulate filter and NOx absorbent. Particularly, in Fig. 1, the soot trapping apparatus having a honeycomb-structured porous ceramic for trapping the soot contained in the exhaust gas and the other particulate and the NOx absorbent can be provided at downstream of the catalyst converter 26 including the catalyst 25 having an oxidation function and at the downstream side of the EGR passage 29.

The soot trapped by the soot trapping apparatus, that is, the soot trapped in the particulate filter begins burning in the presence of an excessive oxygen when a temperature of the exhaust gas flowing into the particulate filter exceeds a fixed temperature. The temperature at which the soot begins burning is different in accordance with the catalyst carried on the particulate filter, and is about 400 in a lower case and about 500 to 600 in a higher case. Accordingly, when the temperature of the exhaust gas becomes higher than the aforementioned temperature, the soot trapped on the particulate filter and the other particulate begins burning spontaneously.

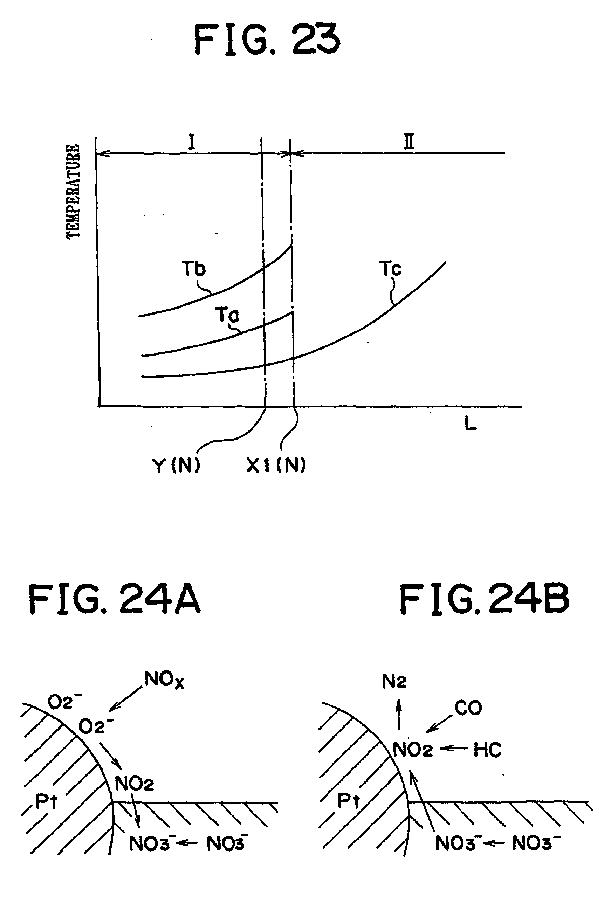

In this case, when the low temperature combustion is carried out, the exhaust gas temperature becomes high, and since the oxidation catalyst is carried on the particulate filter, the temperature of the exhaust gas is further increased by the heat of an oxidation reaction heat. Next, this matter will be described below with reference to Fig. 23.

Fig. 23 schematically shows a relation between various temperatures and the required load L. Ta in Fig. 23 shows a temperature of an exhaust gas flowing into the soot trapping apparatus, that is, the particulate filter when the first combustion mode, that is, the low temperature combustion is carried out in the first operation area I, and Tb shows a temperature of the particulate filter at this time. Further, Tc shows a temperature of the particulate filter when the second combustion mode is performed in the first operation area I and the second operation area II.

As mentioned above, when the low temperature combustion is carried out, the temperature of the exhaust gas becomes higher than that of the case where the second combustion mode is carried out. If the required load L is the same, the temperature of the particulate filter at which the low temperature combustion is carried out becomes higher than the temperature Tc of the particulate filter at which the second combustion mode is carried out. Even in the case where the low temperature combustion is carried out, since the thermal energy at combustion is increased accompanied with the increase in the required load L, the temperature Ta of the exhaust gas flowing into the particulate filter is increased as the required load L is increased. On the contrary, since a large amount of unburned HC and CO is discharged from the engine during the low temperature combustion, the temperature Tb of the particulate filter becomes significantly higher than the temperature Ta of the exhaust gas flowing into the particulate filter by the heat of the oxidation reaction of the unburned HC and CO caused by the catalyst carried on the particulate filter.

As mentioned above, when the low temperature combustion is carried out, the temperature of the particulate filter becomes significantly high, and the low temperature combustion is carried out at a lean air fuel ratio in the presence of excessive oxygen in the exhaust gas. Accordingly, the soot and the other particulate trapped by the particulate filter are spontaneously burned during the low temperature combustion.

On the contrary, in the NOx absorbent arranged at the downstream of the soot trapping apparatus is structured, as mentioned above, for example, an alumina is set as a carrier and at least one selected from an alkaline metal such as a potassium K, a sodium Na, a lithium Li and a cesium Cs, an alkaline earth metal such as a barium Ba and a calcium Ca and a rare earth metal such as a lanthanum La and an yttrium Y, and a noble metal such as a platinum Pt are carried on the carrier. In case of setting a ratio between an air supplied into the exhaust passage at upstream of the engine intake passage, the combustion chamber and the NOx absorbent and a fuel (a hydrocarbon) to an air fuel ratio of the exhaust gas flowing to the NOx absorbent, the NOx absorbent is structured to perform an intake and discharge operation,for absorbing NOx when the air fuel ratio of the inlet exhaust gas is lean and discharging the absorbed NOx when the air fuel ratio of the inlet exhaust gas becomes the stoichiometric air fuel ratio or rich.

When arranging the NOx absorbent 25 within the engine exhaust passage, the NOx absorbent 25 actually performs the NOx intake and discharge operation, however, the detailed mechanism of the intake and discharge operation with respect to the certain part is not clarified. However, it is considered that the intake and discharge operation is performed by the mechanism shown in Fig. 24. Next, an explanation will be given of an embodiment in which a platinum Pt and a barium Ba are carried on the carrier, however, the same mechanism can be obtained when using other noble metal, alkaline metal, alkaline earth metal and rare earth metal.

In the compression ignition type internal combustion engine shown in Fig. 1, the combustion is normally carried out in a state where the air fuel ratio in the combustion chamber 5 is at a lean state. As mentioned above, if the combustion is carried out in a state where the air fuel ratio is lean, a concentration of an oxygen in the exhaust gas, and at this time, the O₂ is attached to a surface of the platinum Pt in the form of O₂⁻ or O²⁻, as shown in Fig. 24A. On the contrary, NO in the inlet exhaust gas reacts with O₂⁻ or O²⁻ on the platinum Pt so as to become NO₂ (2NO + O₂ →2NO₂). Next, a part of the generated NO₂ is absorbed within the absorbent while being oxidized on the platinum Pt so as to diffuse within the absorbent in the form of nitric acid ion NO₃⁻ as shown in Fig. 24A while combining with a barium oxide BaO. In the aforementioned manner, NOx is absorbed within the NOx absorbent. As far as the concentration of the oxygen in the inlet exhaust gas is high, NO₂ is generated on the surface of the platinum Pt, and as far as the NOx absorbing capacity of the absorbent is not saturated, NO₂ is absorbed within the absorbent, thus producing the nitric acid ion NO₃⁻ .

On the contrary, when the air fuel ratio of the inlet exhaust gas is set to rich, the concentration of the oxygen in the inlet exhaust gas is lowered. Then the generation amount of NO₂ on the platinum Pt is lowered. When the generation amount of NO₂ is lowered, the reaction advances in a reverse direction (NO₃⁻→NO₂). The nitric acid ion NO₃⁻ within the absorbent is desorbed from the absorbent in the form of NO₂. At this time, NOx desorbed from the NOx absorbent reacts with a large amount of unburned HC and CO contained in the inlet exhaust gas as shown in Fig. 24B so as to be reduced. In the aforementioned manner, when NO₂ does not exist on the surface of the platinum Pt, NO₂ is desorbed from the absorbent one by one. Accordingly, when the air fuel ratio of the inlet exhaust gas is set to rich, NOx is desorbed from the NOx absorbent 25 for a short time, and the desorbed NOx is reduced. Then NOx is not desorbed to the open air.

Here, in this case, even when setting the air fuel ratio of the inlet exhaust gas to the stoichiometric air fuel ratio, NOx is desorbed from the NOx absorbent 25 . However, in the case of setting the air fuel ratio of the inlet exhaust gas to the stoichiometric air fuel ratio, NOx is desorbed from the NOx absorbent 25 only at a slow speed. It may take a relatively longer time to desorb all the NOx absorbed in the NOx absorbent 25 .

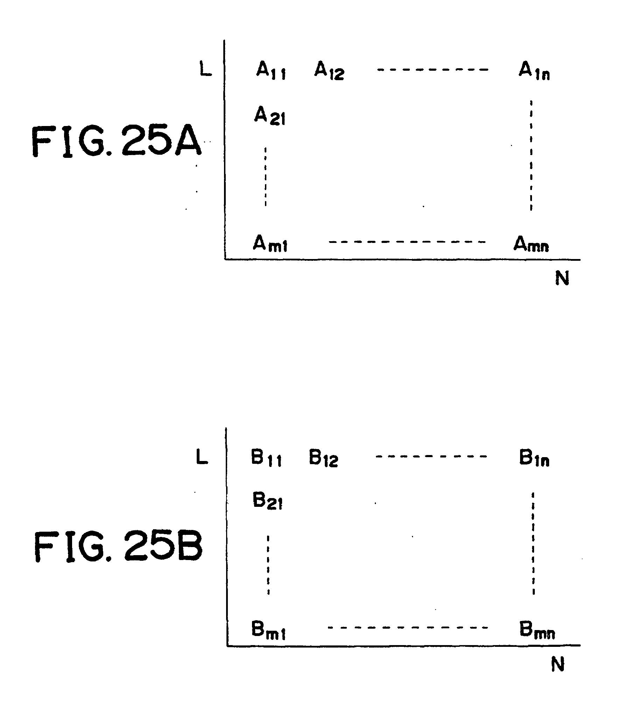

In this case, since the NOx absorbing capacity of the NOx absorbent has a limit, it is necessary to cause the NOx absorbent to desorb NOx before the NOx absorbing capacity of the NOx absorbent is saturated. For this, it is necessary to estimate the NOx amount absorbed in the NOx absorbent 25. Then, it is structured such that the NOx absorbed amount ΣNOX absorbed in the NOx absorbent is estimated by previously determining an NOx absorbed amount A per a unit time when the first combustion mode is carried out as a function of the required load L and the engine speed N in the form of a map shown in Fig. 25A, previously determining an NOx absorbed amount B per a unit time when the second combustion mode is carried out as a function of the required load L and the engine speed N in the form of a map shown in Fig. 25B, and integrating the NOx absorbed amounts A and B per a unit time.

The structure can be made so as to desorb NOx from the NOx absorbent 25 when the NOx absorbed amount ΣNOX exceeds a predetermined allowable maximum value MAX. That is, when the NOx absorbed amount ΣNOX exceeds the allowable maximum value MAX during the low temperature combustion, the air fuel ratio in the combustion chamber 5 is temporarily set to rich, whereby NOx is desorbed from the NOx absorbent. In this case, as mentioned above, when the low temperature combustion is carried out, the soot is hardly generated even if the air fuel ratio is set to rich.

On the contrary, when the NOx absorbed amount ΣNOX exceeds the allowable maximum value MAX during the second combustion mode, an additional fuel is injected at a rear half of an expansion stroke or during an exhaust stroke. The additional fuel amount is set such that the air fuel ratio of the exhaust gas flowing into the NOx absorbent becomes rich. When the additional fuel is injected, NOx is desorbed from the NOx absorbent.

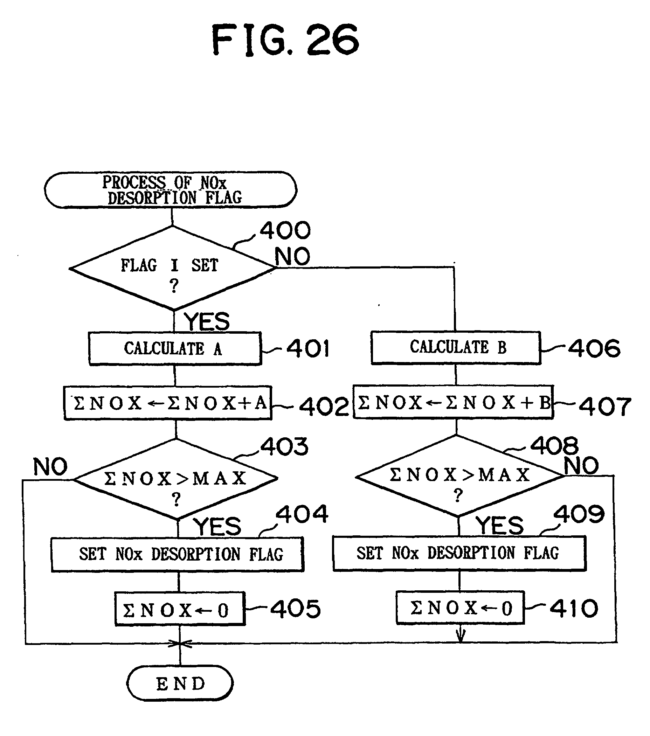

Fig. 26 shows a process routine of a NOx desorption flag set at a time when NOx should be desorbed from the NOx absorbent, and the routine is executed by an interruption at every fixed time interval.

With reference to Fig. 26, first in step 400, it is judged whether or not a flag I indicating that the operation area of the engine is in the first operation area I. When the flag I is set, that is, the operation area of the engine is in the first operation area I, the process proceeds to step 401 where the NOx absorbed amount A per a unit time is calculated from a map shown in Fig. 25A. Next, in step 402, A is added to the NOx absorbed amount ΣNOX. Next, in step 403, it is judged whether or not the NOx absorbed amount ΣNOX exceeds the allowable maximum value MAX. If ΣNOX > MAX, the process proceeds to step 404 where a process for setting the NOx desorption flag for a predetermined time is executed, and next in step 405, ΣNOX is set to 0.

On the contrary, in step 400, when it is judged that the flag I is reset, that is, when the operation area of the engine is in the second operation area II, the process proceeds to step 406, and the NOx absorbed amount B per a unit time is calculated from a map shown in Fig. 25B. Next, in step 407, B is added to the NOx absorbed amount ΣNOX. Next, in step 408, it is judged whether or not the NOx absorbed amount ΣNOX exceeds the allowable maximum value MAX. If ΣNOX > MAX, the process proceeds to step 409 where a process for setting the NOx desorption flag for a predetermined time is executed, and next in step 410, ΣNOX is set to 0.

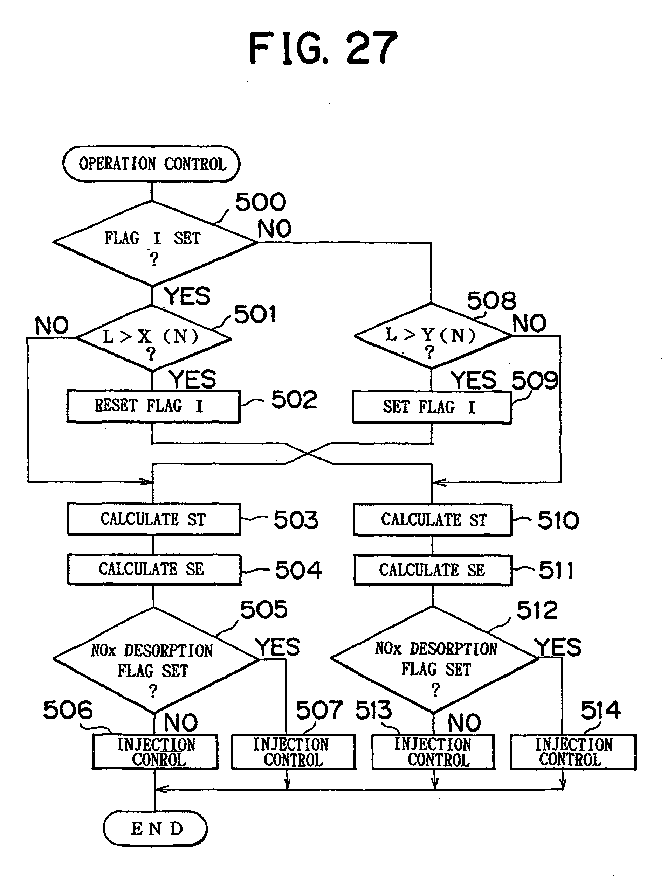

Next, an operation control will be described below with reference to Fig. 27.

With reference to Fig. 27, at first, in step 500, it is judged whether or not a flag I indicating that the operation area of the engine is in the first operation area I. When the flag I is set, that is, the operation area of the engine is in the first operation area I, the process proceeds to step 501 where it is judged whether or not the required load L becomes greater than the first boundary X1 (N). If L ≤ X1 (N), the process proceeds to step 503 where the low temperature combustion is carried out.

That is, in step 503, the target opening degree ST of the throttle valve 20 is calculated from a map shown in Fig. 11A, and the opening degree of the throttle valve 20 is set to the target opening degree ST. Next, in step 504, the target opening degree SE of the EGR control valve 31 is calculated from a map shown in Fig. 11B, and the opening degree of the EGR control valve 31 is set to the target opening degree SE. Next, in step 505, it is judged whether or not the NOx desorption flag is set. When the NOx desorption flag is not set, the process proceeds to step 506 where the fuel injection is performed to achieve the air fuel ratio shown in Fig. 1. At this time, the low temperature combustion is carried out at the lean air fuel ratio.

On the contrary, in step 505, when it is judged that the NOx desorption flag is set, the process proceeds to step 507 where the injection control is executed such that an average air fuel ratio in the combustion chamber 5 becomes rich. At this time, NOx is desorbed from NOx absorbent. On the contrary, in step 501, when it is judged as L > X (N), the process proceeds to step 502 where the flag I is reset and next, the process proceeds to step 510 where the second combustion mode is carried out.

That is, in step 510, the target opening degree ST of the throttle valve 20 is calculated from a map shown in Fig. 13A, and the opening degree of the throttle valve 20 is set to the target opening degree ST. Next, in step 511, the target opening degree SE of the EGR control valve 31 is calculated from a map shown in Fig. 13B, and the opening degree of the EGR control valve 31 is set to the target opening degree SE. Next, in step 512, it is judged whether or not the NOx desorption flag is set. When the NOx desorption flag is not set, the process proceeds to step 513 where the fuel injection is executed so as to achieve the air fuel ratio shown in Fig. 12. At this time, the second combustion mode is carried out at the lean air fuel ratio.

On the contrary, in step 512, when it is judged that the NOx desorption flag is set, the process proceeds to step 514, where an additional fuel is injected such that the air fuel ratio of the exhaust gas flowing into the NOx absorbent becomes rich. At this time, NOx is desorbed from the NOx absorbent.

When the flag I is reset, the process proceeds to step 508 from step 500 in the next process cycle, where it is judged whether or not the required load L becomes lower than the second boundary Y (N). If L ≥ Y (N), the process proceeds to step 510 where the second combustion mode is carried out at the lean air fuel ratio.

On the contrary, in step 508, when it is judged as L < Y (N), the process proceeds to step 509 where the flag I is set. Next, the process proceeds to step 503 where the low temperature combustion is carried out.

Further, in order to detect the temperature of the particulate filter in the soot trapping apparatus, a temperature sensor may be provided. That is, as is understood from Fig. 23, when the required load L becomes high during the low temperature combustion, the temperature of the particulate filter in the soot trapping apparatus is increased. As a result, the soot and the other particulate trapped by the particulate filter are spontaneously burned. Further, also during operation of the engine at a high load, the temperature of the particulate filter in the soot trapping apparatus is increased. As a result, the soot and the other particulate trapped by the particulate filter are spontaneously burned.

However, since a flow speed of the exhaust gas becomes low when turning from the aforementioned state to the low load operation, for example, an idling operation, a combustion heat of the soot and the like taken out by the exhaust gas is reduced. As a result, the particulate filter is superheated, and there is a risk that the particulate filter is melted and damaged.

In this case, when lowering the concentration of the oxygen in the exhaust gas, the combustion of the soot and the like is stopped, thus reducing the temperature of the particulate filter. When the temperature of the particulate filter exceeds the allowable maximum temperature T1, it is structured to set the air fuel ratio in the combustion chamber 5 rich during the low temperature combustion until the temperature of the particulate filter is reduced to the fixed temperature T2 (< T1).

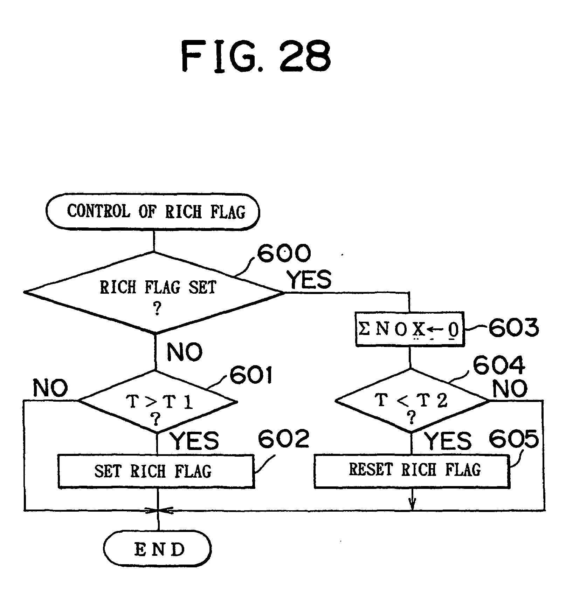

Fig. 28 shows a control routine of a rich flag indicating that the air fuel ratio should be made rich to avoid the melting and damage of the particulate filter, which is executed by an interruption at every fixed interval.

With reference to Fig. 28, first, in step 600, it is judged whether or not the rich flag is set. When the rich flag is not set, the process proceeds to step 601 where it is judged whether or not the temperature T of the particulate filter detected by the temperature sensor becomes higher than the allowable maximum temperature T1. If T > T1, the process proceeds to step 602 where the rich flag is set.

When the rich flag is set, the process proceeds from step 600 to step 603 where the NOx absorbed amount ΣNOX is set to 0. Next, the process proceeds to step 604 where it is judged whether or not the temperature T of the particulate filter becomes a fixed temperature T2 (< T1) or less. IF T < T2, the process proceeds to step 605 where the rich flag is reset.

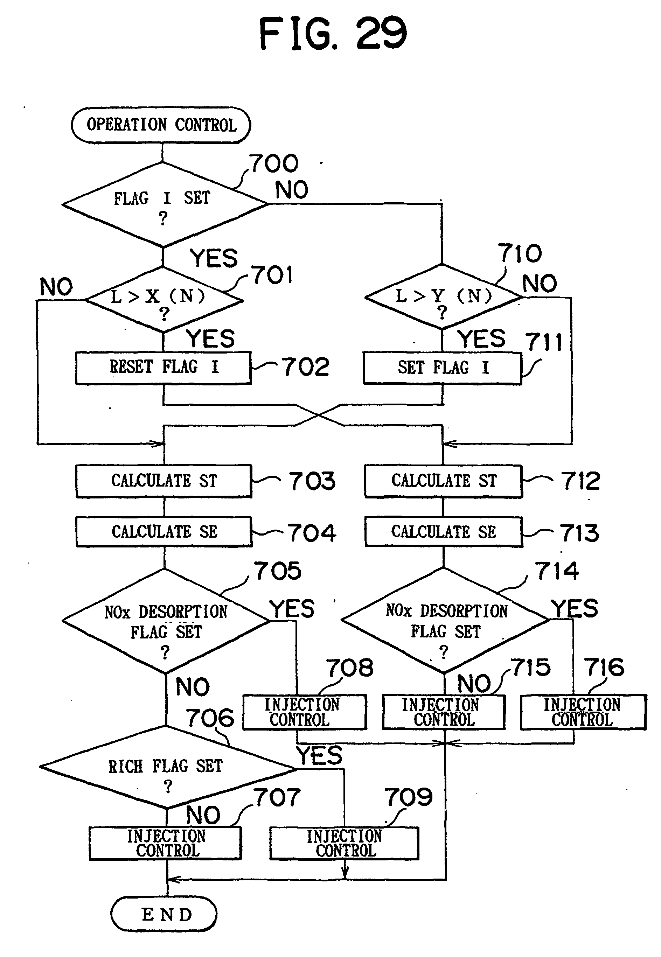

Fig. 29 shows the operation control routine. In this case, the NOx desorption flag in this routine employs the flag processed by the routine shown in Fig. 26.

With reference to Fig. 29, first in step 700, it is judged whether or not the flag indicating that the operation state of the engine is in the first operation area I is set. When the flag I is set, that is, when the operation state of the engine is in the first operation area I, the process proceeds to step 701 where it is judged whether or not the required load L becomes larger than the first boundary X1 (N). If L ≤ X1 (N), the process proceeds to step 703 where the low temperature combustion is carried out.

That is, in step 703, the target opening degree ST of the throttle valve 20 is calculated from the map shown in Fig. 11A, and the opening degree of the throttle valve 20 is set to the target opening degree ST. Next, in step 704, the target opening degree SE of the EGR control valve 31 is calculated from the map shown in Fig. 11B so as to set the opening degree of the EGR control valve 31 to the target opening degree SE. Next, in step 705, it is judged whether or not the NOx desorption flag is set. When the NOx desorption flag is not set, the process proceeds to step 706 where it is judged whether or not the rich flag is set. When the rich flag is not set, the process proceeds to step 707 where the fuel injection is performed so as to realize the air fuel ratio shown in Fig. 10. At this time, the low temperature combustion is carried out at the lean air fuel ratio.

On the contrary, in step 705, when it is judged that the NOx desorption flag is set, the process proceeds to step 708 where the injection control is executed such that the average air fuel ratio in the combustion chamber 5 becomes rich. At this time, NOx is desorbed from the NOx absorbent. Further, in step 706, it is judged that the rich flag is set, the process proceeds to step 709 where the injection control is executed such that the air fuel ratio in the combustion chamber 5 becomes rich for avoiding the melting and damage of the particulate filter.

On the contrary, in step 701, when it is judged as L > X (N), the process proceeds to step 702 where the flag I is reset, and next, the process proceeds to step 712 where the second combustion mode is carried out.

That is, in step 712, the target opening degree ST of the throttle valve 20 is calculated from a map shown in Fig. 13A, such that the opening degree of the throttle valve 20 is set to the target opening degree ST. Next, in step 713, the target opening degree SE of the EGR control valve 31 is calculated from a map shown in Fig. 13B, such that the opening degree of the EGR control valve 31 is set to the target opening degree SE. Next, in step 714 it is judged whether or not the NOx desorption flag is set. When the NOx desorption flag is not set, the process proceeds to step 715 where the fuel injection is performed to achieve the air fuel ratio shown in Fig. 12. At this time, the second combustion mode is carried out at the lean air fuel ratio.

On the contrary, in step 714, when it is judged that the NOx desorption flag is set, the process proceeds to step 716 where an additional fuel is injected at a rear half of the expansion stroke or during the exhaust stroke such that the air fuel ratio of the exhaust gas flowing into the NOx absorbent becomes rich. At this time, NOx is desorbed from the NOx absorbent 25 .

When the flag I is reset, in the next process cycle, the process proceeds from step 700 to step 710 where it is judged whether or not the required load L becomes lower than the second boundary Y (N). If L ≥ Y (N), the process proceeds to step 712 where the second combustion mode is carried out at the lean air fuel ratio.

On the contrary, in step 710, when it is judged as L < Y (N), the process proceeds to step 711 where the flag I is set. Next, the process proceeds to step 703 where the low temperature combustion is carried out.

Further, it is possible to arrange an electric heater at an upstream end of the particulate filter within the soot trapping apparatus and further provide a pressure difference detecting sensor for detecting a pressure difference between an upstream pressure and a downstream pressure of the particulate filter.

When an amount of the soot and the other particulate trapped by the particulate filter becomes more than a predetermined amount, that is, when the pressure difference between the upstream pressure and the downstream pressure of the particulate filter exceeds a fixed pressure, an electric power is supplied to the electric heater, whereby the soot and the like trapped by the particulate filter are burned.

In this case, the ignition can be easily performed in the case where an unburned hydrocarbon, particularly an unburned hydrocarbon having a low boiling point is trapped on the particulate filter as much as possible when being heated by the electric heater. In this view, when the low temperature combustion is carried out, a large amount of hydrocarbon is discharged, and the unburned hydrocarbon is attached on the particulate filter, such that the ignition can be easily performed when being heated by the electric heater. Then, in the case where the amount of the soot and the like trapped by the particulate filter are equal to or more than a predetermined amount, it is structured such that the heating operation by the electric heater is started when the low temperature combustion continues for a fixed time or more, that is, a large amount of unburned hydrocarbon is attached onto the particulate filter.

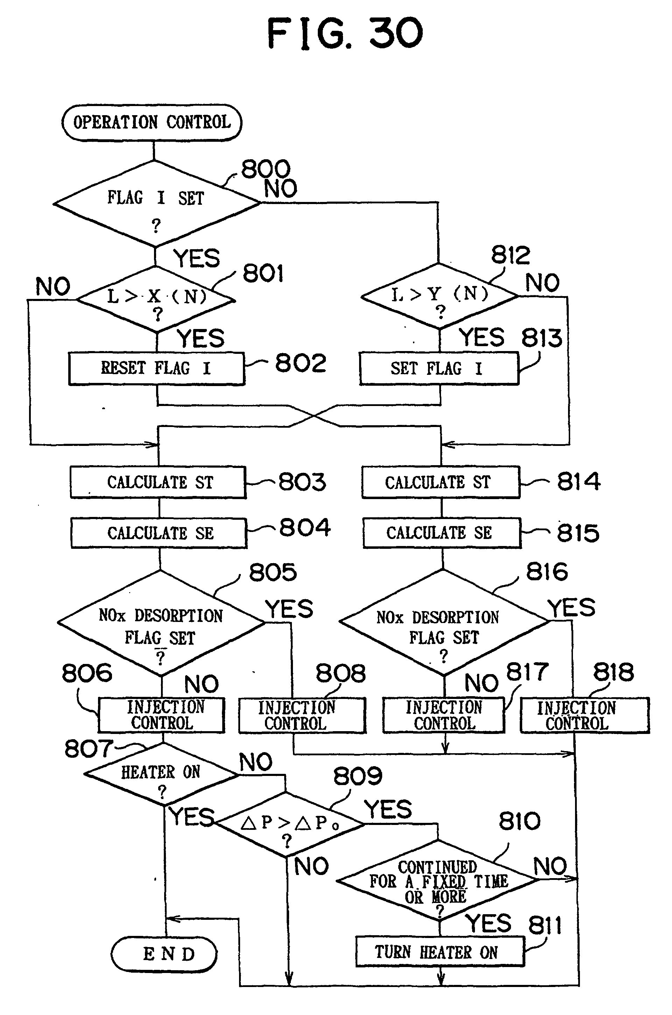

Fig. 30 shows the operation control routine. In this case, the NOx desorption flag in this routine employs the flag processed by the routine shown in Fig. 26.

With reference to Fig. 30, first in step 800, it is judged whether or not the flag indicating that the operation state of the engine is in the first operation area I is set. When the flag I is set, that is, when the operation state of the engine is in the first operation area I, the process proceeds to step 801 where it is judged whether or not the required load L becomes larger than the first boundary X1 (N). If L ≤ X1 (N), the process proceeds to step 803 where the low temperature combustion is carried out.

That is, in step 803, the target opening degree ST of the throttle valve 20 is calculated from the map shown in Fig. 11A, and the opening degree of the throttle valve 20 is set to the target opening degree ST. Next, in step 804, the target opening degree SE of the EGR control valve 31 is calculated from the map shown in Fig. 11B, so that the opening degree of the EGR control valve 31 is set to the target opening degree SE. Next, in step 805, it is judged whether or not the NOx desorption flag is set. When the NOx desorption flag is not set, the process proceeds to step 806 where the fuel injection is performed so as to realize the air fuel ratio shown in Fig. 10. At this time, the low temperature combustion is carried out at the lean air fuel ratio.

Next, in step 807, it is judged whether or not the electric heater is turned on. In the case where the electric heater is not turned on, the process proceeds to step 809 where it is judged whether or not a pressure difference ΔP between a pressure in an upstream side of the particulate filter and a pressure in a downstream side thereof becomes greater than a predetermined pressure difference ΔP₀ on the basis of an output signal of the pressure difference detecting sensor. If ΔP ≤ ΔP₀, the process cycle is finished.

In step 805, when it is judged that the NOx desorption flag is set, the process proceeds to step 808 where the injection control is executed such that the average air fuel ratio in the combustion chamber 5 becomes rich. At this time, NOx is desorbed from the NOx absorbent. Further in step 809, it is judged as ΔP > ΔP₀ , the process proceeds to step 810 where it is judged whether or not the low temperature combustion is continuously carried out for a fixed time or more. When the low temperature combustion is continuously performed for a fixed time or more, the process proceeds to step 811 where the process for turning on the electric heater for a predetermined time is performed. At this time, the combustion of the soot and the like trapped by the particulate filter is started.

On the contrary, in step 801, when it is judged as L > X (N), the process proceeds to step 802 and the flag I is reset, and next, the process proceeds to step 814 and the second combustion mode is carried out.

That is, in step 814, the target opening degree ST of the throttle valve 20 is calculated from a map shown in Fig. 13A, such that the opening degree of the throttle valve 20 is set to the target opening degree ST. Next, in step 815, the target opening degree SE of the EGR control valve 31 is calculated from a map shown in Fig. 13B, such that the opening degree of the EGR control valve 31 is set to the target opening degree SE. Next, in step 816, it is judged whether or not the NOx desorption flag is set. When the NOx desorption flag is not set, the process proceeds to step 817 where the fuel injection is performed so as to achieve the air fuel ratio shown in Fig. 12. At this time, the second combustion mode is carried out at the lean air fuel ratio.

On the contrary, in step 816, when it is judged that the NOx desorption flag is set, the process proceeds to step 818 where an additional fuel is injected at a rear half of the expansion stroke or during the exhaust stroke so that the air fuel ratio of the exhaust gas flowing into the NOx absorbent becomes rich. At this time, NOx is desorbed from the NOx absorbent.

When the flag I is reset, in the next process cycle, the process proceeds from step 800 to step 812 where it is judged whether or not the required load L becomes lower than the second boundary Y (N). If L ≥ Y (N), the process proceeds to step 814 where the second combustion mode is carried out at the lean air fuel ratio.

On the contrary, in step 812, when it is judged as L < Y (N), the process proceeds to step 813 where the flag I is set. Next, the process proceeds to step 803, so that the low temperature combustion is carried out.

A first combustion mode (I) in which the amount of an EGR gas in the combustion chamber (5) is more than the amount of the EGR gas to cause the generation amount of the soot to reach the peak and to hardly generate a soot, and a second combustion mode (II) in which the amount of the EGR gas in the combustion chamber is less than the amount of the EGR gas to cause the generation amount of the soot to reach the peak are selectively carried out. When switching from the first combustion mode (I) to the second combustion mode (II), a fuel injection start timing is delayed, and when switching from the second combustion mode (II) to the first combustion mode (I), the fuel injection start timing is advanced. (Fig. 9)

## Claims

1. An internal combustion engine structured such that a generation amount of a soot is gradually increased to a peak when an amount of an inert gas within a combustion chamber (5) into which fuel is directly injected is increased, and a temperature of a fuel and a surrounding gas at a time of combustion in the combustion chamber (5) becomes lower than a generation temperature of the soot so as to be hardly generated when further the amount of the inert gas in the combustion chamber (5) is increased,
**characterized by**
a switching means (30, 31, 40) for selectively switching between a first combustion mode and a second combustion mode, wherein in the first combustion mode the amount of the inert gas in the combustion chamber (5) is more than the amount of the inert gas when the generation amount of the soot becomes peak, and in which the soot is hardly generated, and
wherein in the second combustion mode the amount of the inert gas in the combustion chamber (5) is less than the amount of the inert gas when the generation amount of the soot becomes peak
wherein, when switching from the first combustion mode to the second combustion mode, a fuel injection start timing is delayed, and when switching from the second combustion mode to the first combustion mode, the fuel injection start timing is advanced.

2. An internal combustion engine as claimed in claim 1, **characterized in that** the second combustion mode is carried out by performing a pilot injection prior to a main injection at least when switching between the first combustion mode and the second combustion mode, the injection start timing of the main injection is delayed in comparison with the injection start timing during the first combustion mode when switching from the first combustion mode to the second combustion mode, and the injection start timing is advanced in comparison with the injection start timing of the main injection when switching from the second combustion mode to the first combustion mode.

3. An internal combustion engine as claimed in claim 2, **characterized in that** when switching from the first combustion mode to the second combustion mode, the injection amount of the main injection is gradually increased and concurrently the injection amount of the pilot injection is gradually reduced.

4. An internal combustion engine as claimed in claim 2 or 3, **characterized in that** when switching from the first combustion mode to the second combustion mode, the injection start timing of the pilot injection is gradually changed from the injection start timing during the first combustion mode to an injection start timing of the pilot injection during the second combustion mode in accordance with the operation state of the engine.

5. An internal combustion engine as claimed in claim in any of claims 2 to 4 , **characterized in that** when switching from the first combustion mode to the second combustion mode, the injection start timing of the main injection is gradually advanced.

6. An internal combustion engine as claimed in claim 2, **characterized in that** when switching from the second combustion mode to the first combustion mode, the injection amount of the main injection is gradually decreased and the injection amount of the pilot injection is gradually increased.

7. An internal combustion engine as claimed in claim 6, **characterized in that** when switching from the second combustion mode to the first combustion mode, the injection start timing of the pilot injection is gradually changed to the injection start timing at the first combustion mode.

8. An internal combustion engine as claimed in claim 6 or 7, **characterized in that** when switching from the second combustion mode to the first combustion mode, the injection start timing of the main injection is gradually delayed.

9. An internal combustion engine as claimed in any of claims 1 to 8, **characterized in that** a fuel injection valve (6) is arranged in the combustion chamber (5).

10. An internal combustion engine as claimed in any of claims 1 to 9, **characterized by** further comprising a recirculation apparatus (29, 31) for recirculating an exhaust gas discharged from the combustion chamber (5) into an engine intake passage (17), wherein said inert gas is formed of a recirculated exhaust gas.

11. An internal combustion engine as claimed in claim 10, **characterized in that** an exhaust gas recirculation rate under the first combustion state is substantially 55 % or greater.

12. An internal combustion engine as claimed in claim 1, **characterized in that** a catalyst (26) with an oxidation function is arranged within an engine exhaust gas passage (24).

13. An internal combustion engine as claimed in claim 12, **characterized in that** the catalyst is formed of at least one element selected from an oxidation catalyst, a three-way catalyst and an NOx absorbent.

14. An internal combustion engine as claimed in claim 12 or 13 , **characterized in that** a soot trapping apparatus including a particulate filter is provided at a downstream side of the catalyst with the oxidation function.

15. An internal combustion engine as claimed in any of claims 1 to 14, **characterized in that** an operation area of the engine is separated into a first operation area (I) at a low load where the first combustion is carried out and a second operation area (II) at a high load where the second combustion is carried out.

16. An internal combustion engine as claimed in claim 15,
**characterized in that**
within the first operation area (I) for performing the first combustion mode, in case of an increase of the required load, the opening degree of the throttle valve (20) is gradually, according to the increase of the required load, increased to approximately two-third of full open state, the opening degree of an EGR control valve (31) is gradually, according to the increase of the required load, increased to a full open state from a nearly full close state, the throttle valve (20) and the EGR control valve (31) being controlled such that the EGR rate becomes equal to or more than 55% approximately, preferably more than 70%, and the air fuel ratio is set to a slight lean air fuel ratio, a fuel injection being carried out before reaching a compression top dead center is, according to the increase of the required load, delayed, and an injection amount is gradually, according to the increase of the required load, increased,
and within the second operation area (II) for performing the second combustion mode, in case of an increase of the required load, the opening degree of the throttle valve (20) is, according to the increase of the required load, increased stepwise from about two-third to the fully open state, the opening degree of the EGR control valve (31) is, according to the increase of the required load, gradually reduced, the throttle valve (20) and the EGR control valve (31) being controlled such that the EGR rate becomes low and the air fuel ratio becomes small, a pilot injection Qp is carried out prior to a main injection Qm, and an injection amount is further gradually, according to the increase of the required load, increased.

## Patentansprüche

1. Verbrennungsmotor, der so strukturiert ist, dass eine erzeugte Rußmenge allmählich bis zu einer Höchstmenge zunimmt, wenn in einer Verbrennungskammer (5), in die Kraftstoff direkt eingespritzt wird, eine Inertgasmenge zunimmt und während eines Verbrennungsvorgangs in der Verbrennungskammer (5) eine Temperatur eines Kraftstoffs und eines umgebenden Gases niedriger wird als eine Erzeugungstemperatur des Rußes, sodass dieser kaum gebildet wird, wenn die Inertgasmenge in der Verbrennungskammer (5) weiter zunimmt,
**gekennzeichnet durch**
ein Schaltmittel (30, 31, 40) zum selektiven Schalten zwischen einem ersten Verbrennungsmodus und einem zweiten Verbrennungsmodus, wobei im ersten Verbrennungsmodus die Inertgasmenge in der Verbrennungskammer (5) größer ist als die Inertgasmenge, wenn die erzeugte Rußmenge den Höchstwert erreicht, und kaum Ruß erzeugt wird, und wobei im zweiten Verbrennungsmodus die Inertgasmenge in der Verbrennungskammer (5) kleiner ist als die Inertgasmenge, wenn die erzeugte Rußmenge den Höchstwert erreicht,
wobei beim Umschalten vom ersten Verbrennungsmodus in den zweiten Verbrennungsmodus ein Kraftstoffeinspritz-Zeitpunkt verzögert und beim Umschalten vom zweiten Verbrennungsmodus in den ersten Verbrennungsmodus der Kraftstoffeinspritz-Zeitpunkt vorverlagert wird.

2. Verbrennungsmotor nach Anspruch 1, **dadurch gekennzeichnet, dass** der zweite Verbrennungsmodus realisiert wird, indem man zumindest beim Umschalten zwischen dem ersten Verbrennungsmodus und dem zweiten Verbrennungsmodüs vor einer Haupteinspritzung eine Voreinspritzung durchführt, wobei beim Umschalten vom ersten Verbrennungsmodus in den zweiten Verbrennungsmodus der Einspritz-Startzeitpunkt der Haupteinspritzung im Vergleich zum Einspritz-Startzeitpunkt des ersten Verbrennungsmodus verzögert und beim Umschalten vom zweiten Verbrennungsmodus in den ersten Verbrennungsmodus der Einspritz-Startzeitpunkt im Vergleich zum Einspritz-Startzeitpunkt der Haupteinspritzung vorverlagert wird.

3. Verbrennungsmotor nach Anspruch 2, **dadurch gekennzeichnet, dass** beim Umschalten vom ersten Verbrennungsmodus in den zweiten Verbrennungsmodus die Einspritzmenge der Haupteinspritzung allmählich gesteigert und gleichzeitig die Einspritzmenge der Voreinspritzung allmählich verringert wird.

4. Verbrennungsmotor nach Anspruch 2 oder 3, **dadurch gekennzeichnet, dass** beim Umschalten vom ersten Verbrennungsmodus in den zweiten Verbrennungsmodus in Abhängigkeit vom Betriebszustand des Motors der Einspritz-Startzeitpunkt der Voreinspritzung allmählich vom Einspritz-Startzeitpunkt während des ersten Verbrennungsmodus in Richtung eines Einspritz-Startzeitpunkts der Voreinspritzung während des zweiten Verbrennungsmodus geändert wird.

5. Verbrennungsmotor nach einem der Ansprüche 2 bis 4, **dadurch gekennzeichnet, dass** beim Umschalten vom ersten Verbrennungsmodus zum zweiten Verbrennungsmodus der Einspritz-Startzeitpunkt der Haupteinspritzung allmählich vorverlagert wird.

6. Verbrennungsmotor nach Anspruch 2, **dadurch gekennzeichnet, dass** beim Umschalten vom zweiten Verbrennungsmodus in den ersten Verbrennungsmodus die Einspritzmenge der Haupteinspritzung allmählich verringert und die Einspritzmenge der Voreinspritzung allmählich vergrößert wird.

7. Verbrennungsmotor nach Anspruch 6, **dadurch gekennzeichnet, dass** beim Umschalten vom zweiten Verbrennungsmodus zum ersten Verbrennungsmodus der Einspritz-Startzeitpunkt der Voreinspritzung allmählich in Richtung des Einspritz-Startzeitpunkts des ersten Verbrennungsmodus geändert wird.

8. Verbrennungsmotor nach Anspruch 6 oder 7, **dadurch gekennzeichnet, dass** beim Umschalten vom zweiten Verbrennungsmodus in den ersten Verbrennungsmodus der Einspritz-Startzeitpunkt der Haupteinspritzung allmählich verzögert wird.

9. Verbrennungsmotor nach einem der Ansprüche 1 bis 8, **dadurch gekennzeichnet, dass** in der Verbrennungskammer (5) ein Kraftstoffeinspritzventil (6) angeordnet ist.

10. Verbrennungsmotor nach einem der Ansprüche 1 bis 9, **dadurch gekennzeichnet, dass** dieser ferner eine Rückführvorrichtung (29, 31) zum Zurückführen eines von der Verbrennungskammer (5) abgeführten Abgases in eine Motoransaugleitung (17) umfasst, wobei das Inertgas aus einem zurückgeführten Abgas gebildet wird.

11. Verbrennungsmotor nach Anspruch 10, **dadurch gekennzeichnet, dass** im ersten Verbrennungsmodus eine Abgasrückführungsrate im Wesentlichen gleich 55 % oder größer ist.

12. Verbrennungsmotor nach Anspruch 1, **dadurch gekennzeichnet, dass** in einer Motorabgasleitung (24) ein Katalysator (26) mit einer Oxidationsfunktion angeordnet ist.

13. Verbrennungsmotor nach Anspruch 12, **dadurch gekennzeichnet, dass** der Katalysator zumindest aus einem Element der aus einem Oxidationskatalysator, einem Dreiwegekatalysator und einem NOx-Absorber bestehenden Gruppe gebildet ist.

14. Verbrennungsmotor nach Anspruch 12 oder 13, **dadurch gekennzeichnet, dass** an einer in Strömungsrichtung nach dem Katalysator mit der Oxidationsfunktion gelegenen Seite eine Rußauffangvorrichtung einschließlich eines Partikelfilters bereitgestellt ist.

15. Verbrennungsmotor nach einem der Ansprüche 1 bis 14, **dadurch gekennzeichnet, dass** ein Arbeitsbereich des Motors in einen ersten Arbeitsbereich (I) bei geringer Last, bei dem der erste Verbrennungsmodus durchgeführt wird, und einen zweiten Arbeitsbereich (II) bei hoher Last eingeteilt wird, bei dem der zweite Verbrennungsmodus durchgeführt wird.

16. Verbrennungsmotor nach Anspruch 15, **dadurch gekennzeichnet, dass** innerhalb des ersten Arbeitsbereichs (I) zum Durchführen des ersten Verbrennungsmodus bei einer Erhöhung der erforderlichen Last der Öffnungsgrad des Drosselventils (20) entsprechend der Zunahme der erforderlichen Last allmählich bis zu ungefähr zwei Dritteln der vollständig geöffneten Stellung, der Öffnungsgrad eines AGR-Steuerventils (31) entsprechend der Zunahme der erforderlichen Last von einer fast vollständig geschlossenen Stellung allmählich bis zu einer vollständig geöffneten Stellung erhöht wird, wobei das Drosselventil (20) und das AGR-Steuerventil (31) so gesteuert werden, dass die AGR-Rate ungefähr gleich 55 % oder größer, vorzugsweise größer als 70 % wird und das Luft-Kraftstoff-Verhältnis schwach mager eingestellt wird, wobei eine vor Erreichen eines oberen Totpunktes der Kompression durchgeführte Kraftstoffeinspritzung entsprechend der Erhöhung der erforderlichen Last verzögert und eine Einspritzmenge entsprechend der Erhöhung der erforderlichen Last allmählich erhöht wird,
und innerhalb des zweiten Arbeitsbereichs (II) zum Durchführen des zweiten Verbrennungsmodus bei einer Erhöhung der erforderlichen Last der Öffnungsgrad des Drosselventils (20) entsprechend der Zunahme der erforderlichen Last schrittweise von ungefähr zwei Dritteln der vollständig geöffneten Stellung erhöht, der Öffnungsgrad des AGR-Steuerventils (31) entsprechend der Zunahme der erforderlichen Last allmählich verringert wird, wobei das Drosselventil (20) und das AGR-Steuerventil (31) so gesteuert werden, dass die AGR-Rate kleiner wird und das Luft-Kraftstoff-Verhältnis abnimmt, und wobei vor einer Haupteinspritzung Qm eine Voreinspritzung Qp durchgeführt und eine Einspritzmenge ferner entsprechend der Zunahme der erforderlichen Last verringert wird.

## Revendications

1. Moteur à combustion interne structuré de manière qu'une quantité de suie produite augmente graduellement vers un pic lorsqu'une quantité de gaz inerte dans une chambre de combustion (5) s'accroît dans laquelle le carburant est injecté directement, et une température de carburant et de gaz environnant au moment de la combustion dans la chambre de combustion (5) devienne inférieure à la température de la suie produite de sorte qu'il en est à peine produit lorsque ensuite augmente la quantité de gaz inerte dans la chambre de combustion (5),
**caractérisé en ce que**
un moyen de commutation (30, 31, 40) destiné à commuter sélectivement entre un premier mode de combustion et un second mode de combustion, dans lequel, dans le premier mode de combustion, la quantité de gaz inerte dans la chambre de combustion (5) est plus importante que la quantité de gaz inerte lorsque la quantité de suie produite arrive à un pic, et dans lequel la suie à peine produite, et dans lequel, dans le second mode de combustion, la quantité de gaz inerte dans la chambre de combustion (5) est inférieure à la quantité de gaz inerte lorsque la quantité de suie produite atteint un pic,
dans lequel, lorsqu'on commute du premier mode de combustion au second mode de combustion, une distribution du début d'injection de carburant est retardée, et lorsqu'on commute du second mode de combustion au premier mode de combustion, la distribution du début d'injection de carburant est avancée.

2. Moteur à combustion interne selon la revendication 1, **caractérisé en ce que** le second mode de combustion se réalise en effectuant une injection pilote avant une injection principale, au moins lorsqu'on commute entre le premier mode de combustion et le second mode de combustion, la distribution du début d'injection de l'injection principale est retardée en comparaison de la distribution du début d'injection durant le premier mode de combustion lorsqu'on commute du premier mode de combustion au second mode de combustion, et la distribution du début d'injection est avancée en comparaison de la distribution du début d'injection de l'injection principale lorsqu'on commute du second mode de combustion au premier mode de combustion.

3. Moteur à combustion interne selon la revendication 2, **caractérisé en ce que** lorsqu'on commute du premier mode de combustion au second mode de combustion, la quantité injectée de l'injection principale augmente graduellement et simultanément la quantité injectée de l'injection pilote se réduit graduellement.

4. Moteur à combustion interne selon la revendication 2 ou 3, **caractérisé en ce que** lorsqu'on commute du premier mode de combustion au second mode de combustion, la distribution du début d'injection de l'injection pilote change graduellement de la distribution du début d'injection durant le premier mode de combustion à la distribution du début d'injection de l'injection pilote durant le second mode de combustion, conformément à l'état de fonctionnement du moteur.

5. Moteur à combustion interne selon l'une quelconque des revendications 2 à 4, **caractérisé en ce que** lorsqu'on commute du premier mode de combustion au second mode de combustion, la distribution du début d'injection de l'injection principale est graduellement avancée.

6. Moteur à combustion interne selon la revendication 2, **caractérisé en ce que** l'on commute du second mode de combustion au premier mode de combustion, la quantité injectée de l'injection principale décroît graduellement et la quantité de l'injection pilote augmente graduellement.

7. Moteur à combustion interne selon la revendication 6, **caractérisé en ce que** lorsqu'on commute du second mode de combustion au premier mode de combustion, la distribution du début d'injection de l'injection pilote change graduellement selon la distribution du début d'injection au premier mode de combustion.

8. Moteur à combustion interne selon la revendication 6 ou 7, **caractérisé en ce que** lorsqu'on commute du second mode de combustion au premier mode de combustion, la distribution du début de l'injection de l'injection principale est graduellement retardée.

9. Moteur à combustion interne selon l'une quelconque des revendications 1 à 8, **caractérisé en ce qu'**un injecteur de carburant (6) est disposé dans la chambre de combustion (5).

10. Moteur à combustion interne selon l'une quelconque des revendications 1 à 9, **caractérisé en** comportant en outre un appareil de recirculation (29, 31) pour recirculer les gaz d'échappement rejetés de la chambre à combustion (5) dans un passage d'admission du moteur (17), dans lequel ledit gaz inerte est formé de gaz d'échappement en recirculation.

11. Moteur à combustion interne selon la revendication 10, **caractérisé en ce que** le taux des gaz d'échappement de recirculation dans le premier état de combustion est, pour l'essentiel, de 55 % ou plus.

12. Moteur à combustion interne selon la revendication 1, **caractérisé en ce qu'**un catalyseur (26) pourvu d'une fonction d'oxydation est disposé dans le passage des gaz d'échappement du moteur (24).

13. Moteur à combustion interne selon la revendication 12, **caractérisé en ce que** le catalyseur est formé d'au moins un élément choisi dans un catalyseur à oxydation, un catalyseur à trois voies et un absorbant de NOx.

14. Moteur à combustion interne selon la revendication 12 ou 13, **caractérisé en ce qu'**un appareil de piégeage de suie incluant un filtre à particules est prévu en aval du catalyseur ayant fonction d'oxydation.

15. Moteur à combustion interne selon l'une quelconque des revendications 1 à 14, **caractérisé en ce qu'**une zone de fonctionnement du moteur est séparée en une première zone de fonctionnement (I) à faible charge où s'effectue la première combustion et une seconde zone de fonctionnement (II) à charge élevée où s'effectue la seconde combustion.

16. Moteur à combustion interne selon la revendication 15, **caractérisé en ce que**
dans la première zone de fonctionnement (I) destinée à effectuer le premier mode de combustion, dans le cas d'un accroissement de la charge requise, le degré d'ouverture du papillon (20) augmente graduellement, selon l'accroissement de la charge requise, à environ les deux-tiers de l'état d'ouverture totale, le degré d'ouverture d'une soupape de commande de EGR (31) est graduellement augmenté, selon l'accroissement de la charge requise, à l'état grand ouvert depuis l'état pratiquement complètement fermé, le papillon (20) et la soupape de commande de EGR (31) étant commandés de sorte que l'état de EGR égalise ou devient supérieur à 55% approximativement, de préférence plus de 70%, et le rapport air/carburant est établi à un rapport air/carburant légèrement pauvre, une injection de carburant étant effectuée avant d'atteindre le point mort haut de compression est retardée, selon l'accroissement de la charge requise, et une quantité injectée est augmentée graduellement, selon l'accroissement de la charge requise,
et dans la seconde zone de fonctionnement (II) destinée à effectuer le second mode de combustion, dans le cas d'un accroissement de la charge requise, le degré d'ouverture du papillon (20) augmente graduellement, selon l'accroissement de la charge requise, depuis environ les deux-tiers à l'état grand ouvert, le degré d'ouverture de la soupape de commande de EGR (31) est graduellement réduit, selon l'augmentation de la charge requise, le papillon (20) et la soupape de commande de EGR (31) étant commandés de sorte que le taux de EGR s'affaiblissent et le rapport air/carburant diminue, une injection pilote Qp s'effectue avant une injection principale Qm, et une quantité injectée est en outre graduellement augmentée, selon l'augmentation de la charge requise.
